# EUROPÄISCHE PATENTSCHRIFT

(11) **EP 3 980 136 B1**
(45) Veröffentlichungstag und Bekanntmachung des Hinweises auf die Patenterteilung: **16.08.2023**
(21) Anmeldenummer: 20721480.0
(22) Anmeldetag: 20.04.2020
(51) Int. Cl.: A62C 3/02, A62C 29/00, A62C 31/05, B64C 39/02, A62C 31/24

(54) **BRANDLÖSCH- ODER BRANDPRÄVENTIONSVORRICHTUNG**
FIRE FIGHTING OR FIRE PREVENTION UNIT
DISPOSITIF D'EXTINCTION D'INCENDIE ET DE PRÉVENTION D'INCENDIE

(30) Priorität: 02.08.2019 DE 102019005451
(43) Veröffentlichungstag der Anmeldung: 13.04.2022
(73) Patentinhaber: TARNAWSKI, Horst, 01159 Dresden (DE)
(72) Erfinder: TARNAWSKI, Horst, 01159 Dresden (DE)
(74) Vertreter: Schmidt, Steffen J.
(86) Internationale Anmeldenummer: PCT/EP2020/060943
(87) Internationale Veröffentlichungsnummer: WO 2021/023403

(56) Entgegenhaltungen:
- WO-A1-2016/016880
- WO-A2-2018/046973
- US-A1- 2009 126 952

## Beschreibung

### Hintergrund

Hier werden eine Brandlösch- oder Brandpräventionsvorrichtung sowie ein zugehöriges Verfahren beschrieben.

Im Falle von Flächenbränden, zum Beispiel von Wald- oder Buschbränden, stehen Feuerwehren und Brandlöscheinheiten vor mehreren Herausforderungen. Zum einen ist ein zu löschendes Brandgebiet für die Feuerwehren oder Brandlöscheinheiten oft nicht oder nur schwer zugänglich. Zum anderen steht unmittelbar vor Ort oft keine oder zumindest keine ausreichende Wasserversorgung zur Verfügung. Weiter ist aufgrund auftretender Winde und des damit verbundenen Funkenflugs sowie aus Gründen der zu vermeidenden Eigengefährdung meist nur eine Annäherung der Brandlöscheinheiten an einen Brandherd aus Richtung der vorherrschenden Windrichtung möglich. Zudem ist die Löschung eines, insbesondere eines sich ausbreitenden, Flächenbrandes mit bodengebundener Löschtechnik oft nur punktuell möglich und daher nicht zur Eindämmung oder vollständigen Löschung des Brandes geeignet.

Eine bekannte Lösung ist der Einsatz von Löschflugzeugen und Löschhubschraubern, welche einerseits sehr flexibel und auch in unzugänglichen Gebieten einsetzbar sind und andererseits eine Abgabe von Löschmitteln, insbesondere von Löschwasser, aus großer Höhe erlauben, welches insbesondere zur Bekämpfung von Flächenbränden aufgrund der Löschmittelverteilung über große Flächen - ähnlich einem plötzlich auftretenden Starkregen - sehr gut geeignet ist. Nachteilig hierbei sind jedoch die enormen Betriebs- und Einsatzkosten der Löschflugzeuge und Löschhubschrauber und deren geringe Verfügbarkeit. Weiter ist es besonders nachteilig, dass die Löschflugzeuge oder Löschhubschrauber aufgrund der jeweiligen maximalen Traglast bzw. Beladungsobergrenze nur einen beschränkten Löschmittelvorrat mitführen können, welcher zudem nur nach einer Landung an einem meist nicht unmittelbar in der Nähe liegenden Flugfeld aufgefüllt werden kann, sodass die Löschflugzeuge oder Löschhubschrauber stets nur intervallweise zur Bekämpfung eines naturgemäß permanenten Flächenbrandes zur Verfügung stehen. Ferner limitiert auch der jeweils mitgeführte Treibstoffvorrat der Löschflugzeuge oder Löschhubschrauber deren Einsatzradius und Einsatzdauer.

Das Dokument DE 654 782 A offenbart eine Vorrichtung zur Löschung von Bränden, die während eines Flugbetriebs an der Außenseite eines Flugzeuges auftreten.

Das Dokument DD 2 10 209 A1 offenbart eine Wassersprühanlage zur Brandbekämpfung sowie zur Raum- und Flächenbenetzung, die eine Anordnung aus Rohrleitungen, Ventilen, Steckverbindungen und Sprühdüsen umfasst und dazu geeignet ist, eine vorbestimmte Fläche mit Wasser zu benetzen.

Das Dokument DE 10 2007 055 024 A1 offenbart eine Brandschutzeinrichtung für forst- oder landwirtschaftlich genutzte Flächen, die eine Anordnung von kraftschlüssig miteinander verbundenen Rohrleitungen mit schlitzförmigen Austrittsöffnungen umfasst.

WO 2016/016880 A1 offenbart eine fliegende Brandschutzeinrichtung, die mittels eines Druckwasserschlauches und nach unten gerichteten Düsen gewisse Flugeigenschaften aufweist, die für die Brandbekämpfung genutzt werden kann.

US 2009/126952 A1 offenbart ein ferngesteuertes Fluggerät, welches für Feuerlöschzwecke eingesetzt wird.

US 2018/046973 A2 offenbart ein System für die Waldbrandbekämpfung, bei der diverse Fluggeräte einen Schlauch in der Luft halten, um einen Löschmittelstrahl in das Feuer zielen zu können.

### Zugrundeliegende Aufgabe

Trotz vorhandener Vorrichtungen zur Brandlöschung und Brandprävention besteht somit weiter Bedarf an einer Vorrichtung und an einem Verfahren zur Überwindung der vorangehend beschriebenen Nachteile, welche insbesondere bei der Löschung von Flächenbränden auftreten.

### Vorgeschlagene Lösung

Diese Aufgabe wird durch eine Vorrichtung nach dem Anspruch 1 und ein Verfahren nach dem Anspruch 10 gelöst. Vorteilhafte Ausgestaltungen und Weiterbildungen werden durch die Ansprüche 2 bis 9 definiert.

Eine hier vorgeschlagene Brandlösch- oder Brandpräventionsvorrichtung umfasst eine Löschmittelleitungsanordnung. Die Löschmittelleitungsanordnung umfasst mehrere Längsleitungselemente, welche jeweils zur Durchleitung eines, insbesondere flüssigen, Brandlöschmittels geeignet sind und mehrere Querleitungselemente, welche jeweils zur Durchleitung eines, insbesondere flüssigen, Brandlöschmittels geeignet sind.

Die Längsleitungselemente und/oder die Querleitungselemente können zum Beispiel jeweils als Röhren, Schläuche oder Hohlelemente ausgebildet sein.

Ein Brandlöschmittel kann im einfachsten Fall Löschwasser sein. Jedoch können situations- und verfügbarkeitsabhängig zum Beispiel auch spezielle Brandlöschflüssigkeiten und/oder Löschwasser mit speziellen Brandlöschzusätzen verwendet werden.

Jedes der Längsleitungselemente ist mit zumindest einem der Querleitungselemente durch zumindest ein Verbindungselement verbunden, wobei die Verbindungselemente jeweils dazu geeignet sind, das Brandlöschmittel von einem Längsleitungselement in ein Querleitungselement oder von einem Querleitungselement in ein Längsleitungselement zu leiten bzw. weiter zu leiten. Mit anderen Worten kann beschrieben werden, dass die Verbindungselemente jeweils dazu geeignet sind, das Brandlöschmittel zwischen den Längsleitungselementen und den Querleitungselementen zu verteilen. In einer Variante kann jedes der Längsleitungselemente mit jedem der Querleitungselemente durch jeweils zumindest ein Verbindungselement verbunden sein.

In einer Ausführungsform können die Längsleitungselemente jeweils zumindest im Wesentlichen orthogonal zu den Querleitungselementen angeordnet sein, sodass diese gemeinsam eine, insbesondere kartesische, Gitterstruktur ausbilden. Dieses ist jedoch nicht in allen Ausführungsformen notwendig. So sind insbesondere Anordnungen möglich, bei welchen die Längsleitungselemente jeweils in einem Winkel von ungleich 90° zu den Querleitungselementen angeordnet sind, sodass die Längsleitungselemente im Zusammenwirken mit den Querleitungselementen rautenförmige Flächen ausbilden und/oder umschließen.

Die Verbindungselemente können zum Beispiel als Schlauch- oder Rohrverbindungsstücke, Durchlassventile oder (Zwischen-)Leitungselemente ausgebildet sein, welche jeweils dazu geeignet sind, eine Überleitung des, insbesondere flüssigen, Brandlöschmittels von einem ersten Leitungselement in ein zweites Leitungselement zu ermöglichen.

Optional können die Verbindungselemente steuerbare Ventile aufweisen, welche automatisiert oder durch einen Bediener der Brandlösch- oder Brandpräventionsvorrichtung veranlasst, eine Durchleitung des, insbesondere flüssigen, Brandlöschmittels freigeben oder blockieren. Die einzelnen Verbindungselemente können hierbei einzeln, gruppenweise und/oder gemeinsam (an-)gesteuert werden.

Die Verbindungselemente fixieren einerseits die jeweiligen Längsleitungselemente und die jeweiligen Querleitungselemente mechanisch aneinander und stellen andererseits Löschmitteldurchlässe zwischen den Längsleitungselementen und den Querleitungselementen her. Optional kann die Brandlösch- oder Brandpräventionsvorrichtung auch zusätzliche Befestigungselemente aufweisen, welche eine mechanisch belastbare Verbindung der Längsleitungselemente mit den Querleitungselementen herstellen und/oder unterstützen.

Ferner umfasst die Brandlösch- oder Brandpräventionsvorrichtung zumindest eine Löschmittelzuleitung, welche an der Löschmittelleitungsanordnung angeordnet und dazu geeignet ist, das Brandlöschmittel in zumindest eines der Längsleitungselemente oder der Querleitungselemente einzuleiten.

Die Löschmittelzuleitung kann zum Beispiel als Röhre, als Schlauch, als Hohlelement oder als Kombination der vorgenannten Beispiele ausgestaltet sein. Zum Beispiel kann die Löschmittelzuleitung zumindest teilweise als Schlauch und/oder zumindest teilweise als Rohr ausgebildet sein.

Die Löschmittelzuleitung kann mit einem der Längsleitungselemente oder einem der Querleitungselemente gekoppelt sein, sodass die Zuleitung des Brandlöschmittels in das Innere eines Längsleitungselementes und/oder eines Querleitungselements ermöglicht ist. Zumindest eines der Längsleitungselemente und/oder der Querleitungselemente kann hierzu eine Aufnahme- oder Kopplungsvorrichtung aufweisen, die zu einer mechanisch belastbaren Verbindung mit der Löschmittelzuleitung geeignet ist, wobei das, insbesondere flüssige, Brandlöschmittel von der Löschmittelzuleitung in das Längsleitungselement und/oder das Querleitungselement durch die Aufnahme- oder Kopplungsvorrichtung eingeleitet werden kann. Zum Beispiel kann zumindest eines der Längsleitungselemente und/oder der Querleitungselemente eine Schlauchaufnahme aufweisen, die zur Aufnahme und Fixierung eines handelsüblichen Feuerwehrschlauches geeignet ist, wobei das Brandlöschmittel durch den Feuerwehrschlauch und die Schlauchaufnahme in das Längsleitungselement und/oder das Querleitungselement zugeführt werden kann.

Weiter weist die Brandlösch- oder Brandpräventionsvorrichtung mehrere Auslässe auf, welche jeweils an der Löschmittelleitungsanordnung angeordnet und dazu geeignet sind, das Brandlöschmittel aus der Löschmittelleitungsanordnung auszuleiten.

Die Auslässe können insbesondere an den Längsleitungselementen und/oder den Querleitungselementen angeordnet sein. Im einfachsten Fall können die Auslässe durch Öffnungen in den Längsleitungselementen und/oder den Querleitungselementen ausgebildet sein, welche einen Austritt des Brandlöschmittels aus der Brandlösch- oder Brandpräventionsvorrichtung ermöglichen. Jedoch können insbesondere zumindest ein Teil der Auslässe oder alle Auslässe als Löschmittelsprühdüsen und/oder Löschmittelberegnungsdüsen ausgebildet sein, welche zum Beispiel an den Längsleitungselementen und/oder den Querleitungselementen angeordnet und dazu eingerichtet sind, dass Brandlöschmittel, welches in die Längsleitungselemente und/oder die Querleitungselemente eingeleitet wird, aus der Brandlösch- oder Brandpräventionsvorrichtung auszuleiten. Eine Löschmittelsprühdüse bezeichnet hierbei eine technische Vorrichtung zur Beeinflussung des flüssigen Brandlöschmittels beim Übertritt von einer Rohrströmung in den freien Raum. Eine Löschmittelberegnungsdüse bezeichnet hierbei eine technische Vorrichtung zur Vereinzelung eines kontinuierlichen Brandlöschmittelstroms in mehrere Brandlöschmittelstrahlen oder Brandlöschmitteltropfen.

Zumindest eine flugfähige Trägervorrichtung ist an der Löschmittelleitungsanordnung angeordnet bzw. mechanisch belastbar mit der Löschmittelleitungsanordnung verbunden und dazu geeignet, die Löschmittelleitungsanordnung mit den Auslässen und zumindest einem Teil der Löschmittelzuleitung in einen Abstand zur Erdoberfläche anzuheben und zumindest zeitweise zu halten.

In einer Ausführungsform können mehrere bzw. eine Vielzahl von flugfähigen Trägervorrichtungen an der Löschmittelleitungsanordnung angeordnet bzw. mechanisch belastbar mit der Löschmittelleitungsanordnung verbunden sein. Zum Beispiel können auch sechzig oder mehr der flugfähigen Trägervorrichtungen an der Löschmittelleitungsanordnung angeordnet bzw. mechanisch belastbar mit der Löschmittelleitungsanordnung verbunden sein.

Eine flugfähige Trägervorrichtung kann insbesondere eine selbstständig flugfähige, also zu einem Abheben von der Erdoberfläche und zur räumlichen Bewegung in der Erdatmosphäre geeignete, technische Vorrichtung sein. Zum Beispiel kann die flugfähige Trägervorrichtung ein unbemanntes Luftfahrzeug, UAV, sein. Die flugfähige Trägervorrichtung kann insbesondere eine Drohne, bevorzugt eine Hubschrauber- bzw. Helikopterdrohne sein, welche eine Drehflügel- bzw. Rotationsflügelanordnung zur Herstellung der Flugfähigkeit aufweist.

Ein Anheben in einen Abstand zur Erdoberfläche bezeichnet hierbei eine Bewegung der flugfähigen Trägervorrichtung/en und den mit ihr/ihnen mechanisch verbundenen Vorrichtungselementen in einer Richtung wegweisend von der Erdoberfläche.

Ein Halten, insbesondere ein Halten in einem Abstand zur Erdoberfläche, der
flugfähigen Trägervorrichtung/en und den mit ihr/ihnen mechanisch verbundenen Vorrichtungselementen bezeichnet hierbei eine Positionierung der
flugfähigen Trägervorrichtung/en und den mit ihr/ihnen mechanisch verbundenen Vorrichtungselementen an einer vorbestimmten oder vorbestimmbaren Position in der Erdatmosphäre, wobei zwischen der Erdoberfläche und der zumindest einen flugfähigen Trägervorrichtung und den mit ihr mechanisch verbundenen Vorrichtungselementen, zumindest für ein vorbestimmtes oder vorbestimmbares Zeitintervall, zumindest im Wesentlichen keine oder nur eine geringe relative Bewegung auftritt.

Die Löschmittelzuleitung der Brandlösch- oder Brandpräventionsvorrichtung ist mit einem Löschmittelreservoir verbunden, welches dazu geeignet ist, der Löschmittelleitungsanordnung das Brandlöschmittel bereitzustellen und/oder zuzuleiten, während die Löschmittelleitungsanordnung von der zumindest einen flugfähigen Trägervorrichtung in einem Abstand zur Erdoberfläche angehoben oder gehalten ist bzw. wird.

Ein Löschmittelreservoir im Sinne der Erfindung kann jede, insbesondere bodengebundene, stationäre oder verlegefähige technische Vorrichtung oder natürliche Brandlöschmittelquelle sein, welche dazu geeignet ist, ein Brandlöschmittel, zum Beispiel Löschwasser, bereitzustellen. Zum Beispiel kann das Löschmittelreservoir ein Tankwagen, ein Anschluss an eine stationäre technische Wasserversorgung, insbesondere ein Hydrant, ein Fluss, ein Teich oder See, ein Pool oder Schwimmbecken und/oder ein Wasserbehälter oder eine Talsperre sein. Das Löschmittelreservoir kann dazu geeignet sein, mit der Löschmittelzuleitung, zum Beispiel mit einem Schlauch verbunden zu werden, um die Zuleitung des Brandlöschmittels an die Löschmittelleitungsanordnung zu ermöglichen.

Um das Zuleiten des Brandlöschmittels an die Löschmittelleitungsanordnung, welche von der zumindest einen flugfähigen Trägervorrichtung angehoben oder gehalten wird, zu ermöglichen kann das Löschmittelreservoir, zum Beispiel ein Tankwagen oder Feuerwehreinsatzfahrzeug, eine Löschmittelpumpe umfassen. Alternativ oder ergänzend kann eine solche Löschmittelpumpe, zum Beispiel im Falle der Brandlöschmittelentnahme aus einem See, auch separat bereitgestellt werden. Eine solche Löschmittelpumpe kann eine handelsübliche Feuerwehrpumpe sein, welche ein Brandlöschmittel, zum Beispiel mit einem Druck von vierzig Bar, in die Löschmittelzuleitung pumpt.

Ein Vorteil der erfindungsgemäßen Brandlösch- oder Brandpräventionsvorrichtung ist es, dass, ähnlich wie bei einem Löschflugzeug oder einem Löschhubschrauber eine Brandbekämpfung effektiv und flexibel durch das Auslassen von Brandlöschmittel oberhalb einer gewünschten Stelle der Erdoberfläche, insbesondere oberhalb eines Brand- oder Brandpräventionsgebiets, erfolgen kann. Im Gegensatz zu einem Löschflugzeug oder einem Löschhubschrauber kann die hier vorgeschlagene Brandlösch- oder Brandpräventionsvorrichtung jedoch von einer oder mehreren bodengebundenen Einrichtungen und/oder von einem oder mehreren natürlichen Brandlöschmittelreservoir/en jedoch, quasi endlos, mit einem kontinuierlich zuführbaren Brandlöschmittel und/oder mit Betriebsenergie und/oder Betriebsstoff versorgt werden, sodass eine Einsatzdauer nicht limitiert ist und die Brandbekämpfung bzw. Brandprävention kontinuierlich erfolgen kann.

Ein weiterer Vorteil der erfindungsgemäßen Brandlösch- oder Brandpräventionsvorrichtung ist es, dass, im Gegensatz zu Löschflugzeugen oder Löschhubschraubern, keine Betriebsenergie für das anheben eines Löschmittelreservoirs bzw. Löschmittelvorrates aufgewendet werden muss, da die Löschmittelzuleitung von einem bodengebundenen Löschmittelreservoir bzw. Löschmittelvorrat aus erfolgen kann.

Ferner ist ein Vorteil der erfindungsgemäßen Brandlösch- oder Brandpräventionsvorrichtung, dass, im Gegensatz zum Einsatz von Löschflugzeugen oder Löschhubschraubern, keine oder kaum relevante Luftverwirbelungen oder Wirbelschleppen durch die in einem Abstand zur Erdoberfläche gehaltene Löschmittelleitungsanordnung auftreten, welche einen Auslass des Brandlöschmittels erschweren oder zumindest unerwünscht, zum Beispiel durch eine Ablenkung eines ausgelassenen Löschmittelstrahls, beeinflussen.

Optional kann zumindest ein Teil der Auslässe als Löschmittelsprühdüsen oder Löschmittelberegnungsdüsen ausgebildet sein und/oder zumindest ein Teil der Auslässe das Brandlöschmittel zumindest im Wesentlichen senkrecht zur Erdoberfläche ausleiten.

Ein Vorteil hierbei ist, dass durch den Löschmittelauslass zumindest kein wesentlicher Impuls bzw. keine wesentliche Kraft auf die Brandlösch- oder Brandpräventionsvorrichtung wirkt, welche die Brandlösch- oder Brandpräventionsvorrichtung aus einer vorbestimmten und/oder vorbestimmbaren Position in der Erdatmosphäre, insbesondere aus einer Position oberhalb eines zu bekämpfenden Brandes, drängt. Wird das Brandlöschmittel im Wesentlichen senkrecht zur Erdoberfläche abgegeben, sind die durch den Löschmittelauslass hervorgerufenen Gegenkräfte, welche auf die Löschmittelleitungsanordnung und die mit ihr mechanisch verbundenen Vorrichtungselemente wirken, durch die flugfähigen Trägervorrichtungen, welche die Löschmittelleitungsanordnung und die mit ihr mechanisch verbundenen Vorrichtungselemente anheben oder halten, durch eine Anpassung der Betriebsleistung einfach zu kompensieren.

Mit anderen Worten kann beschrieben werden, dass die bei einer zumindest im Wesentlichen senkrecht zur Erdoberfläche vorgenommenen Ausleitung von Brandlöschmittel auftretenden Gegenkräfte, welche auf die Löschmittelleitungsanordnung und die mit ihr mechanisch verbundenen Vorrichtungselemente wirken, zumindest im Wesentlichen parallel zur Erdanziehungskraft auf die Löschmittelleitungsanordnung und die mit ihr mechanisch verbundenen Vorrichtungselemente einwirken. Die Ausleitung eines Brandlöschmittels ist somit insbesondere dann als im Wesentlichen senkrecht zur Erdoberfläche anzusehen, wenn die durch die Brandlöschmittelausleitung verursachten Gegenkräfte bzw. Impulse, welche jeweils auf die Löschmittelleitungsanordnung und die mit ihr mechanisch verbundenen Vorrichtungselemente wirken, zumindest im Wesentlichen parallel zur Erdanziehungskraft auf die Löschmittelleitungsanordnung und die mit ihr mechanisch verbundenen Vorrichtungselemente einwirken.

In einer Weiterbildung kann zumindest ein Teil der Auslässe das Brandlöschmittel zumindest im Wesentlichen parallel zur Erdoberfläche ausleiten. Hierzu können zum Beispiel seitlich an den Enden der Längsleitungselemente und/oder seitlich an den Enden der Querleitungselemente Auslässe, insbesondere Löschmittelsprühdüsen oder Löschmittelberegnungsdüsen ausgebildet sein, wobei sich die Auslässe jeweils paarweise gegenüberliegen.

Ein Vorteil hierbei ist, dass eine durch ein zumindest im Wesentlichen parallel zur Erdoberfläche ausgeleitetes Brandlöschmittel hervorgerufene Gegenkraft bzw. ein durch ein zumindest im Wesentlichen parallel zur Erdoberfläche ausgeleitetes Brandlöschmittel hervorgerufener Impuls, welche/r auf die Löschmittelleitungsanordnung wirkt, von einer der Gegenkraft entgegengesetzten Kraft bzw. einem dem Impuls entgegengerichteten Impuls, welche/r ebenfalls durch ein Ausleiten von Brandlöschmittel hervorgerufen wird, zumindest teilweise kompensiert wird.

Optional kann die Brandlösch- oder Brandpräventionsvorrichtung zumindest eine flugfähige Zuleitungsträgervorrichtung umfassen, welche an der Löschmittelzuleitung angeordnet und dazu geeignet ist, zumindest einen Teil der Löschmittelzuleitung in einen Abstand zur Erdoberfläche anzuheben und zumindest zeitweise in einem Abstand zur Erdoberfläche zu halten. Die Löschmittelzuleitung, welche mit dem Löschmittelreservoir verbunden ist, kann hierbei der Löschmittelleitungsanordnung das Brandlöschmittel zuleiten, während die Löschmittelzuleitung von der zumindest einen flugfähigen Zuleitungsträgervorrichtung angehoben oder gehalten ist bzw. wird.

Ein Vorteil hierbei ist, dass die Löschmittelzuleitung, welche zum Beispiel ein Schlauch ist, welcher zumindest in einem mit Brandlöschmittel gefüllten Betriebszustand abhängig von der Position der Löschmittelleitungsanordnung bzw. deren Abstand zur Erdoberfläche ein nicht unerhebliches Gewicht aufweisen kann, durch die zumindest eine Zuleitungsträgervorrichtung, welche zum Beispiel ein unbemanntes Luftfahrzeug, insbesondere eine Drohne, sein kann angehoben und/oder gehalten werden kann. Hierdurch verringert sich das durch die flugfähige/n Trägervorrichtung/en, welche an der Löschmittelleitungsanordnung angerordnet ist/sind, anzuhebende und/oder in einer Position in der Erdatmosphäre zu haltende Gesamtgewicht. Die flugfähige/ Trägervorrichtung/en, welche an der Löschmittelleitungsanordnung angerordnet ist/sind, werden somit entlastet.

Optional können auch mehrere Zuleitungsträgervorrichtungen an der Löschmittelzuleitung angeordnet sein. Insbesondere können die mehreren Zuleitungsträgervorrichtungen jeweils in einem regelmäßigen Abstand von zum Beispiel jeweils fünf oder zehn Metern zueinander an der Löschmittelzuleitung angeordnet sein.

Ferner kann die Brandlösch- oder Brandpräventionsvorrichtung zumindest eine Betriebsenergie- und/oder Betriebsstoffzuleitung aufweisen, welche mit der zumindest einen flugfähigen Trägervorrichtung und/oder mit der zumindest einen flugfähigen Zuleitungsträgervorrichtung verbunden und dazu eingerichtet ist, die zumindest eine flugfähige Trägervorrichtung und/oder die zumindest eine flugfähige Zuleitungsträgervorrichtung mit Betriebsenergie und/oder Betriebsstoff zu versorgen. Der Betriebsstoff kann ein flüssiger Betriebsstoff, zum Beispiel ein Betriebsstoff auf Mineralölbasis, sein. Insbesondere kann der Betriebsstoff (Flugzeug-)Benzin oder Kerosin sein.

Ein Vorteil hierbei ist, dass die Betriebsenergiezuleitung mit einer stationären oder verlegefähigen bodengebundenen Energie- und/oder Betriebsstoffversorgungseinrichtung verbunden werden kann, welche eine quasi endlose, erfindungsgemäß elektrische, Betriebsenergie für die zumindest eine flugfähige Trägervorrichtungn und/oder die flugfähige/n Zuleitungsträgervorrichtung/en bereitstellen kann. Eine Einsatzdauer der Brandlösch- oder Brandpräventionsvorrichtung ist somit nicht durch einen mitzuführenden Betriebsenergie- oder Treibstoffvorrat/Betriebsstoffvorrat begrenzt. Alternativ oder ergänzend können die zumindest eine flugfähige Trägervorrichtung und/oder die zumindest eine flugfähige Zuleitungsträgervorrichtung auch über Energiespeicher, zum Beispiel Akkumulatoren, verfügen bzw. diese umfassen, welche einen kurzzeitigen Betrieb der Brandlösch- oder Brandpräventionsvorrichtung auch ohne bodengebundene Energieversorgungseinrichtung erlauben und/oder die Überbrückung kurzeitiger Ausfälle der bodengebundenen Energieversorgungseinrichtung, zum Beispiel im Falle eines Generatorwechsels oder einer Umschaltung einer Energieversorgungseinrichtung, zu überbrücken. Ferner kann die kurzeitige Energieversorgung mittels eines oder mehrere Akkumulator/en auch für ein kontrolliertes Lande- bzw. Rückführmanöver der Brandlösch- oder Brandpräventionsvorrichtung im Falle eines unbeabsichtigten Ausfalls der bodengebundenen Energieversorgungseinrichtung genutzt werden.

Ferner können auch weitere Vorrichtungselemente, zum Beispiel steuerbare Verbindungselemente oder steuerbare Auslässe durch die Betriebsenergiezuleitung mit, insbesondere elektrischer, Betriebsenergie versorgt werden.

Auch kann die Brandlösch- oder Brandpräventionsvorrichtung zumindest eine Steuerleitung aufweisen, welche mit der zumindest einen flugfähigen Trägervorrichtung und/oder mit der zumindest einen flugfähigen Zuleitungsträgervorrichtung verbunden und dazu eingerichtet ist, der zumindest einen flugfähigen Trägervorrichtung und/oder der zumindest einen flugfähigen Zuleitungsträgervorrichtung ein Steuersignal zuzuleiten.

Ein Vorteil hierbei ist, dass die Steuerleitung mit einer stationären oder verlegefähigen bodengebundenen Steuerungsvorrichtung, zum Beispiel mit einer elektronischen Datenverarbeitungsanlage verbunden werden kann, wobei die Steuerungsvorrichtung Steuersignale für die zumindest eine flugfähige Trägervorrichtung und/oder die zumindest eine flugfähige Zuleitungsträgervorrichtung bereitstellt. Alternativ oder ergänzend kann auch eine Funkfernsteuerung für die zumindest eine flugfähige Trägervorrichtung und/oder für die zumindest eine flugfähige Zuleitungsträgervorrichtung vorgesehen sein. Ferner können auch weitere Vorrichtungselemente, zum Beispiel steuerbare Verbindungselemente oder steuerbare Auslässe durch die Steuerleitung oder mittels einer Funkfernsteuerung (an-)gesteuert und/oder geregelt werden.

In einer Variante kann zumindest ein Teil der Längsleitungselemente und/oder der Querleitungselemente jeweils ein Fertigungsmaterial mit oder aus Metall, insbesondere mit oder aus Stahl, Aluminium und/oder Titan, und/oder Kunststoffen, insbesondere kohlenfaserverstärkten Kunststoffen, CFK, aufweisen.

Ein Vorteil hierbei ist, dass durch die Verwendung leichter Materialien wie Aluminium, Titan oder kohlenfaserverstärktem Kunststoff das Gewicht der Brandlösch- oder Brandpräventionsvorrichtung reduziert werden kann. Hierdurch wird/werden die flugfähige/n Trägervorrichtung/en, welche die Löschmittelleitungsanordnung und die mit ihr mechanisch verbundenen Vorrichtungselemente anhebt/anheben oder hält/halten, entlastet.

Optional kann zumindest ein Teil der Längsleitungselemente und/oder der Querleitungselemente jeweils als Teleskopelement ausgebildet sein, wobei jedes Teleskopelement zumindest ein, insbesondere röhrenförmiges, Innenelement und ein das Innenelement zumindest teilweise umgebendes, insbesondere röhrenförmiges, Außenelement umfasst, wobei das Innenelement gegenüber dem Außenelement verlagerbar ist. Auch sind ausdrücklich Ausführungsformen möglich, bei denen jeweils mehrere zumindest teilweise ineinander angeordnete Innenelemente und ein Außenelement jeweils eines oder mehrere Längsleitungselemente und/oder eines oder mehrere Querleitungselemente ausbilden. Zum Beispiel können jeweils vier zumindest teilweise ineinander angeordnete Innenelemente und ein Au-ßenelement jeweils ein Längsleitungselement und/oder ein Querleitungselement ausbilden, wobei die Innenelemente und das Außenelement eines Teleskopelements jeweils relativ zueinander verlagerbar sein können.

Zumindest eines der Innenelemente des Teleskopelements, insbesondere ein innerstes der Innenelemente des Teleskopelements, kann an einem äußeren Ende verschlossen und/oder verschließbar sein. Zum Beispiel kann ein Innenelement des Teleskopelements eine Röhrenform mit einem für Brandlöschmittel undurchlässigem Sackende aufweisen. Alternativ kann an einem Ende eines Innenelements ein verschließbarer und/oder steuerbarer Auslass angeordnet sein.

Die Verlagerung eines Innenelements gegenüber dem Außenelement und/oder einem weiteren Innenelement kann zumindest teilweise durch einen physikalischen Druck im Innern der Längsleitungselemente und/oder der Querleitungselemente, welche in diesem Fall jeweils als Teleskopelemente ausgebildet sind, bewirkt werden, wobei der physikalische Druck insbesondere durch die Einleitung des Brandlöschmittels in die Löschmittelleitungsanordnung bewirkt werden kann.

Alternativ oder ergänzend kann die Verlagerung des Innenelements gegenüber dem Außenelement und/oder einem weiteren Innenelement zumindest teilweise durch einen Seilzugmechanismus und/oder eine elektromechanische Verlagerungsvorrichtung bewirkt werden.

Ein Vorteil der Ausbildung der Längsleitungselemente oder der Querleitungselemente als Teleskopelemente ist, dass die Brandlösch- oder Brandpräventionsvorrichtung für einen Transport, zum Beispiel für einen Transport auf einem handelsüblichen Lastkraftwagen, in einen kompakten Transportzustand, in welchem die Innenelemente jeweils zum überwiegenden Teil in den jeweiligen Außenelementen angeordnet sind, gebracht werden kann, während eine Brandlöschmittelausleitung aus der Brandlösch- oder Brandpräventionsvorrichtung in einem Betriebszustand, in welchem die Innenelemente zum überwiegenden Teil aus den Au-ßenelementen heraus verlagert sein können, über eine gegenüber dem Transportzustand der Brandlösch- oder Brandpräventionsvorrichtung vergrößerte Ausbringungsfläche erfolgen kann. Mit anderen Worten kann beschrieben werden, dass mit Hilfe der Teleskopelemente einerseits eine Transportierbarkeit der Brandlösch- oder Brandpräventionsvorrichtung mit einem handelsüblichen Lastkraftwagen sichergestellt werden kann, wobei die Löschmittelleitungsanordnung für einen Einsatzbetrieb der Brandlösch- oder Brandpräventionsvorrichtung gegenüber ihren Transportabmessungen vergrößert werden kann. Dieses erlaubt es, einen Abstand der Auslässe, welche an der Löschmittelleitungsanordnung angeordnet sind, relativ zueinander zu vergrößern, sodass das Brandlöschmittel über eine größere Fläche verteilt werden kann.

Zumindest ein Teil der flugfähigen Trägervorrichtung/en kann hierbei jeweils an den Außenelementen und/oder den Innenelementen angeordnet bzw. mit diesen mechanisch verbunden sein.

Die Außenelemente und/oder die Innenelemente können optional jeweils Dichtungen aufweisen, die einen Austritt von Brandlöschmittel in einem Verbindungsbereich zwischen den Au-ßenelementen und den Innenelementen und/oder zwischen zwei jeweils teilweise ineinander positionierten bzw. angeordneten Innenelementen verhindern oder zumindest reduzieren. Dieses ist jedoch nicht in allen Ausführungsformen notwendig, da zumindest ein teilweiser Austritt von Brandlöschmittel aus den Verbindungsbereichen eines Teleskopelements dem Einsatzzweck der Brandlösch- oder Brandpräventionsvorrichtung nicht schädlich entgegensteht.

Ferner kann eine Verlagerung der Innenelemente eines Teleskopelements gegenüber dem Außenelement und/oder einem weiteren Innenelement des Teleskopelements vor und/oder während und/oder nach einem Anheben der Löschmittelleitungsanordnung und der mit ihr mechanisch verbundenen Vorrichtungselemente durch die zumindest eine flugfähige Trägervorrichtung bewirkt werden bzw. geschehen. Mit anderen Worten kann beschrieben werden, dass die Längsleitungselemente oder die Querleitungselemente, welche zumindest teilweise als Teleskopelemente ausgebildet sein können, in einem Einsatzvorbereitungszustand der Brandlösch- oder Brandpräventionsvorrichtung auf der Erdoberfläche ausgefahren oder eingefahren bzw. relativ zueinander verlagert werden können oder während eines bereits andauernden Flugbetriebs der Brandlösch- oder Brandpräventionsvorrichtung ausgefahren oder eingefahren bzw. relativ zueinander verlagert werden können. Werden mehrere flugfähige Trägervorrichtungen, welche jeweils an den Außenelementen und/oder den Innenelementen angeordnet sind, verwendet, so können diese eine Verlagerung der Innenelemente relativ zu den Außenelementen und/oder weiteren Innenelementen jeweils zumindest unterstützen. Die flugfähigen Trägervorrichtungen, welche zum Beispiel UAVs, insbesondere Drohnen, sein können, können hierbei manuell oder mit Hilfe einer elektronischen Steuerung in ihrem Flugweg gesteuert bzw. geregelt werden.

In einer Weiterbildung umfasst die Brandlösch- oder Brandpräventionsvorrichtung eine Steuereinrichtung, insbesondere eine elektronische Datenverarbeitungsanlage, die dazu geeignet ist, die zumindest eine flugfähige Trägervorrichtung und/oder die zumindest eine flugfähige Zuleitungsträgervorrichtung und/oder einen oder mehrere Auslässe und/oder eine Verlagerung der Innenelemente und/oder ein Anheben oder Halten oder eine Positionierung der Brandlösch- oder Brandpräventionsvorrichtung zu steuern und/oder zu regeln. Die elektronische Datenverarbeitungsanlage kann hierzu vordefinierte Betriebsprogramme und/oder eine Eingabevorrichtung für einen oder mehrere Bediener der Brandlösch- oder Brandpräventionsvorrichtung umfassen. Die Eingabevorrichtung kann dazu eingerichtet sein, einem Bediener die Steuerung oder Regelung der Brandlösch- oder Brandpräventionsvorrichtung und/oder einzelner Vorrichtungsbestandteile und/oder einzelner Funktionen der Brandlösch- oder Brandpräventionsvorrichtung zu ermöglichen. Ferner kann die Steuerung, welche zum Beispiel eine elektronische Datenverarbeitungsanlage sein kann, eine optisch wahrnehmbare Ausgabevorrichtung, zum Beispiel einen Bildschirm und/oder eine Leuchtanzeige, umfassen, die einem oder mehreren Bediener/n der Brandlösch- oder Brandpräventionsvorrichtung einen Betriebszustand und/oder einzelne Betriebsparameter wie zum Beispiel eine Flughöhe oder eine momentane Abgabemenge eines Brandlöschmittels anzeigt.

Ferner kann die Steuervorrichtung insbesondere dazu eingerichtet sein, die Flugbewegungen und/oder einzelnen Betriebsparameter mehrerer flugfähiger Trägervorrichtungen und/oder flugfähiger Zuleitungsträgervorrichtungen zu steuern und/oder zu regeln und/oder aufeinander abzustimmen bzw. miteinander zu synchronisieren. Dieses kann insbesondere mit Hilfe von vordefinierten Steuerungs- und/oder Regelungsalgorithmen geschehen, welche in der Steuervorrichtung, welche insbesondere eine elektronische Datenverarbeitungsvorrichtung sein kann, hinterlegt bzw. gespeichert sein können.

Weiter kann die Steuervorrichtung dazu ausgebildet sein, auftretende Luftbewegungen, welche durch Winde oder durch von einem Brand erwärmte Luft verursacht werden können, durch die gezielte Steuerung einzelner oder mehrerer flugfähiger Trägervorrichtungen und/oder flugfähiger Zuleitungsträgervorrichtungen zumindest im Wesentlichen zu kompensieren und so ein Halten der Löschmittelleitungsanordnung und der mit ihr mechanisch verbundenen Vorrichtungselemente in einer vorbestimmten oder vorbestimmbaren Position in der Erdatmosphäre zu gewährleisten. Mit anderen Worten kann beschrieben werden, dass die Steuervorrichtung durch die Steuerung und/oder Regelung der zumindest einen flugfähigen Trägervorrichtung und/oder der zumindest einen flugfähigen Zuleitungsträgervorrichtung eine Position der Löschmittelleitungsanordnung und der mit ihr mechanisch verbundenen Vorrichtungselemente in der Erdatmosphäre auch unter dem Einfluss sich relativ zur Erdoberfläche und/oder zur Brandlösch- oder Brandpräventionsvorrichtung bewegender Luftströmungen gewährleisten kann.

In einer Variante kann die Steuereinrichtung dazu eingerichtet sein, im Fall eines Eintretens eines vordefinierten Ereignisses, zum Beispiel einer Unterbrechung einer Brandlöschmittelzufuhr aus dem Brandlöschmittelreservoir oder eines Ausfalls der bodengebundenen Energie- oder Betriebsstoffversorgungseinrichtung ein akustisch wahrnehmbares Warnsignal für den oder die Bediener der Brandlösch- oder Brandpräventionsvorrichtung zu veranlassen.

Ferner kann die Brandlösch- oder Brandpräventionsvorrichtung zumindest eine Sensorvorrichtung aufweisen, insbesondere eine Rauchsensorvorrichtung und/oder eine optisch erfassende Sensorvorrichtung und/oder eine wärme- bzw. temperaturerfassende Sensorvorrichtung, die dazu geeignet ist, einen Brand oder einen Teil eines Brandes, insbesondere einen Brandherd oder ein Glutnest, und/oder eine Brandausbreitungsrichtung zu erfassen. Die Sensorvorrichtung kann zum Beispiel an der Löschmittelleitungsanordnung angeordnet sein. Optional kann die Sensorvorrichtung ein Erfassungsergebnis, zum Beispiel über die Steuerleitung und/oder über eine Datenfunkverbindung, der Steuereinrichtung zuleiten, welche das Erfassungsergebnis bei einer, insbesondere automatisierten, Steuerung und/oder Regelung der Brandlösch- oder Brandpräventionsvorrichtung berücksichtigt. Alternativ oder ergänzend kann das Erfassungsergebnis dem einen oder mehreren Bediener/n der Brandlösch- oder Brandpräventionsvorrichtung durch die Ausgabevorrichtung angezeigt werden.

Ein Verfahren zur Brandprävention und zur Löschung eines Brandes umfasst die Schritte:
- Bereitstellen einer Brandlösch- oder Brandpräventionsvorrichtung nach der vorangehenden Beschreibung;
- Bereitstellen eines Löschmittelreservoirs, welches ein, insbesondere flüssiges, Brandlöschmittel bevorratet oder zuführt;
- Anheben der Löschmittelleitungsanordnung und zumindest eines Teils der Löschmittelzuleitung mit der zumindest einen flugfähigen Trägervorrichtung bis zu einem vorbestimmten Abstand zur Erdoberfläche;
- Verlagern der Löschmittelleitungsanordnung und zumindest eines Teils der Löschmittelzuleitung über ein vorbestimmtes Zielgebiet;
- Einleiten des Brandlöschmittels aus dem Löschmittelreservoir in die Löschmittelleitungsanordnung durch die Löschmittelzuleitung;
- Ausleiten des Brandlöschmittels aus der Löschmittelleitungsanordnung.

Das Zielgebiet bezeichnet hierbei einen von einem Bediener oder der Steuereinrichtung vorbestimmten oder vorbestimmbaren Teil der Erdoberfläche, der für eine Brandlöschung und/oder eine Brandprävention vorgesehen ist. Die zumindest eine flugfähige Trägervorrichtung und/oder die zumindest eine flugfähige Zuleitungsträgervorrichtung sind dazu eingerichtet, die Löschmittelleitungsanordnung und zumindest einen Teil der Löschmittelzuleitung mit der zumindest einen flugfähigen Trägervorrichtung bis zu einem vorbestimmten Abstand zur Erdoberfläche und/oder über ein vorbestimmtes Zielgebiet zu halten bzw. zu verlagern und/oder in einer vorbestimmten oder vorbestimmbaren Position in der Erdatmosphäre, insbesondere über einem vorbestimmten Zielgebiet, zu halten.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei zeigen alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Fig. gezeigten Komponenten sind hierbei ausdrücklich nicht maßstäblich.
- Fig. 1: zeigt schematisch und beispielhaft eine Löschmittelleitungsanordnung mit mehreren Längsleitungselementen, welche jeweils zur Durchleitung eines flüssigen Brandlöschmittels geeignet sind und mehreren Querleitungselementen, welche jeweils zur Durchleitung eines flüssigen Brandlöschmittels geeignet sind.
- Fig. 2: zeigt schematisch und beispielhaft ein Querleitungselement, welches als Teleskopelement mit einem Außenelement und mehreren Innenelementen ausgebildet ist.
- Fig. 3: zeigt schematisch und beispielhaft ein Längsleitungselement, welches als Teleskopelement mit einem Außenelement und mehreren Innenelementen ausgebildet ist.
- Fig. 4: zeigt schematisch und beispielhaft ein weiteres Querleitungselement und ein weiteres Längsleitungselement, welches jeweils als Teleskopelement mit einem Außenelement und mehreren Innenelementen ausgebildet sind.
- Fig. 5: zeigt schematisch und beispielhaft eine Löschmittelleitungsanordnung mit mehreren Längsleitungselementen, welche jeweils zur Durchleitung eines flüssigen Brandlöschmittels geeignet sind und mehreren Querleitungselementen, welche jeweils zur Durchleitung eines flüssigen Brandlöschmittels geeignet sind, wobei die Längsleitungselemente und die Querleitungselemente jeweils als Teleskopelemente ausgebildet sind.
- Fig. 6: zeigt schematisch und beispielhaft eine Löschmittelleitungsanordnung mit mehreren Längsleitungselementen, welche jeweils zur Durchleitung eines flüssigen Brandlöschmittels geeignet sind und mehreren Querleitungselementen, welche jeweils zur Durchleitung eines flüssigen Brandlöschmittels geeignet sind, wobei die Längsleitungselemente und die Querleitungselemente jeweils als Teleskopelemente ausgebildet sind und wobei mehrere flugfähige Trägervorrichtungen an der Löschmittelleitungsanordnung angeordnet sind.
- Fig. 7: zeigt schematisch und beispielhaft eine Brandlösch- oder Brandpräventionsvorrichtung in einem Betriebszustand.
- Fig. 8: zeigt schematisch und beispielhaft eine mögliche Anordnung von Auslässen an einer Löschmittelleitungsanordnung mit mehreren Längsleitungselementen und mehreren Querleitungselementen, wobei die Längsleitungselemente und die Querleitungselemente jeweils als Teleskopelemente ausgebildet sind.
- Fig. 9: zeigt schematisch und beispielhaft eine weitere Brandlösch- oder Brandpräventionsvorrichtung in einem Betriebszustand.

### Detaillierte Beschreibung der Zeichnungen

Vergleichbare bzw. gleiche und gleichwirkende Komponenten und Merkmale sind in den Figuren jeweils mit denselben Bezugszeichen versehen. Teilweise ist in den Figuren aus Übersichtsgründen auch auf Bezugszeichen einzelner Merkmale und Komponenten verzichtet worden, wobei diese Merkmale und Komponenten in anderen Figuren bereits mit Bezugszeichen versehen sind. Die Komponenten und Merkmale, die in Bezug auf die weiteren Figuren nicht erneut beschrieben sind, ähneln in ihrer Ausbildung und Funktion den entsprechenden Komponenten und Merkmalen gemäß den anderen Figuren.

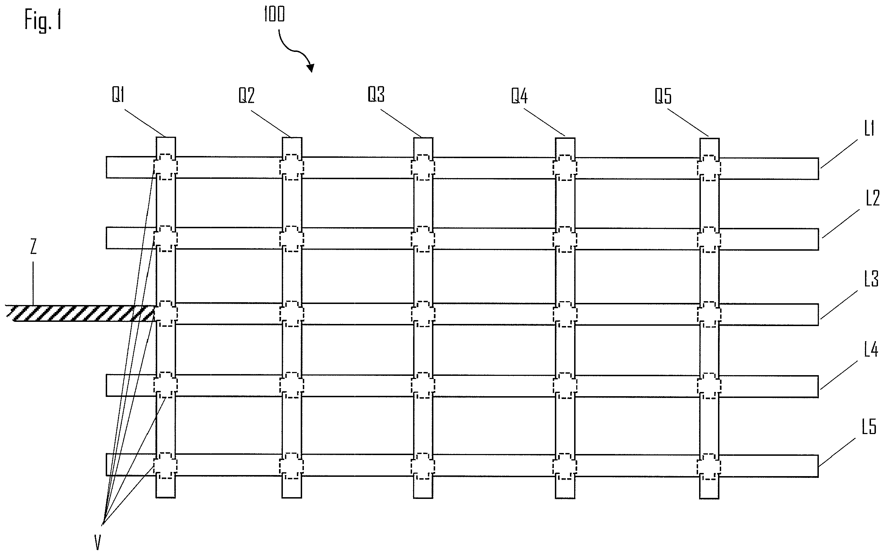

Die Fig. 1 zeigt ein Beispiel für eine Löschmittelleitungsanordnung 100 mit fünf Längsleitungselementen L1, L2, L3, L4, L5 und fünf Querleitungselementen Q1, Q2, Q3, Q4, Q5 in einer Draufsichtsansicht. Es sind jedoch ausdrücklich auch Ausführungsformen der Löschmittelleitungsanordnung 100 mit einer beliebigen Anzahl von Längsleitungselementen und Querleitungselementen möglich, wobei eine jeweilige Anzahl der Längsleitungselemente und der Querleitungselemente identisch oder unterschiedlich sein kann.

Die Längsleitungselemente L1, L2, L3, L4, L5 sind zueinander jeweils parallel und jeweils in einem rechten Winkel gegenüber den Querleitungselementen Q1, Q2, Q3, Q4, Q5 angeordnet. Die Querleitungselemente Q1, Q2, Q3, Q4, Q5 sind ebenfalls zueinander parallel angeordnet. Im gezeigten Beispiel sind die Längsleitungselemente L1, L2, L3, L4, L5 und die Querleitungselemente Q1, Q2, Q3, Q4, Q5 jeweils als zylinderförmige Aluminiumröhren, welche zur Durchleitung von Löschwasser geeignet sind, ausgebildet. Jedoch können in anderen Ausführungsformen ausdrücklich auch andere Querleitungselemente und/oder Längsleitungselemente, welche nicht zylinderförmig ausgebildet sind und/oder andere Fertigungsmaterialien als Aluminium aufweisen, umfassen. Die Querleitungselemente und/oder Längsleitungselemente können hierbei jeweils zueinander identisch oder zueinander unterschiedlich ausgebildet sein.

Im dem in Fig. 1 gezeigten Beispiel weisen zwei jeweils zueinander benachbart angeordnete Längsleitungselemente einen jeweils identischen Abstand zueinander auf. Ferner weisen auch zwei jeweils zueinander benachbart angeordnete Querleitungselemente einen jeweils identischen Abstand zueinander auf. Dieses ist jedoch ausdrücklich nicht in allen Ausführungsformen notwendig.

Ferner zeigt die Fig. 1, dass die Längsleitungselemente L1, L2, L3, L4, L5 jeweils mit den Querleitungselementen Q1, Q2, Q3, Q4, Q5 durch Verbindungselemente V verbunden sind. Im in Fig. 1 gezeigten Beispiel weist die Löschmittelleitungsanordnung 100 fünfundzwanzig Verbindungselemente V auf, welche jedes Längsleitungselement mit jedem Querleitungselement verbinden. Es sind jedoch ausdrücklich auch Ausführungsformen der Löschmittelleitungsanordnung 100 möglich, bei welchen ein oder mehrere Längsleitungselement/e jeweils nur mit einem Querleitungselement oder mit einem Teil der Querleitungselemente durch ein Verbindungselement verbunden ist/sind.

Die Verbindungselemente V stellen eine mechanisch belastbare Verbindung zwischen den Längsleitungselementen L1, L2, L3, L4, L5 und den Querleitungselementen Q1, Q2, Q3, Q4, Q5 her, sodass die Querleitungselemente jeweils an den Längsleitungselementen angeordnet sind. Die Verbindungselemente V sind zudem jeweils dazu ausgebildet, Löschwasser von einem der Längsleitungselemente L1, L2, L3, L4, L5 in eines der Querleitungselemente Q1, Q2, Q3, Q4, Q5 oder von einem der Querleitungselemente Q1, Q2, Q3, Q4, Q5 in eines der Längsleitungselemente L1, L2, L3, L4, L5 zu leiten bzw. zu verteilen.

Weiter zeigt die Fig. 1 schematisch eine Löschmittelzuleitung Z, welche im gezeigten Beispiel mit dem Querleitungselement Q1 verbunden und dazu eingerichtet ist, Löschwasser in die Löschmittelleitungsanordnung 100 bzw. in das Innere der jeweils als Aluminiumröhren ausgebildeten Längsleitungselemente L1, L2, L3, L4, L5 und Querleitungselemente Q1, Q2, Q3, Q4, Q5 einzuleiten. Im in Fig. 1 gezeigten Beispiel ist die Löschmittelzuleitung Z als handelsüblicher Feuerwehrschlauch mit einem Innendurchmesser von fünfundzwanzig Millimetern ausgebildet, jedoch sind in anderen Ausführungsformen ausdrücklich auch andere Löschmittelzuleitungen möglich.

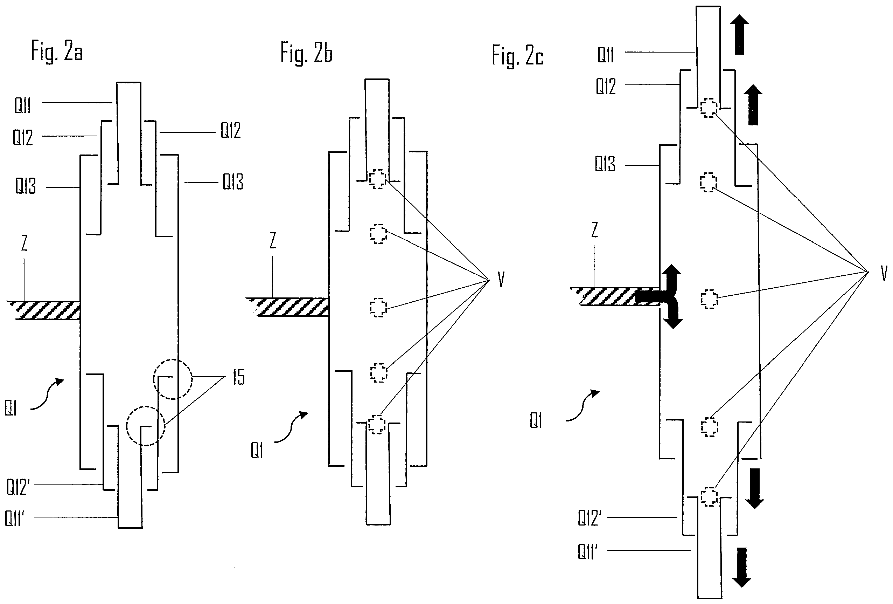

Im konkret in der Fig. 1 schematisch gezeigten Beispiel für eine Löschmittelleitungsanordnung sind die Längsleitungselemente L1, L2, L3, L4, L5 und die Querleitungselemente Q1, Q2, Q3, Q4, Q5 jeweils einstückig als Aluminiumröhren ausgebildet. Jedoch können die Längsleitungselemente und/oder Querleitungselemente auch als Teleskopelemente, insbesondere als einseitige oder zweiseitige Teleskopelemente, ausgebildet sein. Ein Vorteil hierbei ist, dass die Löschmittelleitungsanordnung aus einem Transportzustand in einen Betriebszustand expandiert werden kann. Ein Vorteil hierbei ist, dass die Löschmittelleitungsanordnung, einerseits, mit eingefahrenen Teleskopelementen kompakt, zum Beispiel mit einem handelsüblichen Lastkraftwagen, transportierbar ist und, andererseits, mit ausgefahrenen Teleskopelementen betrieben werden kann. Beispiele für geeignete Teleskopelemente zeigen die Fig. 2 bis 4.

Die Fig. 2 zeigt schematisch ein Beispiel für ein als Teleskopelement ausgebildetes Querleitungselement Q1 mit einem Außenelement Q13 und vier zumindest teilweise in dem Außenelement Q13 angeordneten Innenelementen Q11, Q11', Q12, Q12' in einer Querschnittsansicht. Die in der Fig. 2 gezeigten Innenelemente Q11, Q11', Q12, Q12' sind jeweils gegenüber dem Außenelement Q13 und gegenüber den jeweils weiteren Innenelementen verlagerbar angeordnet. Im gezeigten Beispiel sind sowohl die Innenelemente Q11, Q11', Q12, Q12' als auch das Außenelement Q13 als röhrenförmige bzw. zylinderförmige Leitungselemente mit einem kreisrunden Querschnitt ausgebildet, jedoch sind in anderen Ausführungsformen ausdrücklich auch andersartig ausgeformte Innenelemente und/oder Außenelemente, zum Beispiel mit ellipsenförmigen Querschnittsgeometrien, möglich.

Ein jeweils innerstes Innenelement Q11, Q11' ist zumindest teilweise in einem jeweils weiteren Innenelement Q12, Q12' angeordnet, wobei die jeweils zumindest teilweise ineinander angeordneten Innenelemente Q11, Q11', Q12, Q12' jeweils zumindest teilweise in dem Au-ßenelement Q13 positionierbar sind. Die jeweils innersten Innenelemente Q11, Q11' sind jeweils an einem äußeren Ende verschlossen, sodass das in das Teleskopelement eingeleitete Löschwasser nicht an diesem jeweils äußeren Ende der jeweils innersten Innenelemente Q11, Q11' austreten kann.

Das Außenelement Q13 ist mit einer Löschmittelzuleitung Z gekoppelt. Die Löschmittelzuleitung Z ist an dem Außenelement Q13 mechanisch fixiert und dazu ausgebildet, Löschwasser in das Innere des Teleskopelements einzuleiten. Das Außenelement Q13 weist hierzu in dem in Fig. 2 gezeigten Beispiel eine entsprechende Löschmittelzuleitungsaufnahme (nicht gezeigt) auf, die eine Löschmitteleinlassöffnung in dem Außenelement Q13 umfasst. Die Löschmittelzuleitungsaufnahme kann ferner eine Vorrichtung zur Aufnahme der Löschmittelzuleitung Z, zum Beispiel eine Schlauchaufnahme umfassen.

Die zumindest teilweise in dem Außenelement Q13 positionierbaren Innenelemente Q11, Q11', Q12, Q12' weisen jeweils einen Kontaktbereich 15 zu einem jeweils weiteren Innenelement oder zu dem Außenelement Q13 auf. In dem in der Fig. 2 gezeigten Beispiel sind die Kontaktbereiche nicht abgedichtet bzw. für Löschwasser zumindest nicht vollständig undurchlässig. Vielmehr sind die Innenelemente Q11, Q11', Q12, Q12' jeweils mit einem Spiel bzw. einem Bewegungsfreiraum ineinander bzw. in dem Außenelement Q13 teilweise aufgenommen bzw. angeordnet, sodass eine Verlagerbarkeit der Innenelemente relativ zueinander und relativ zu dem Außenelement gewährleistet ist. Eine zumindest teilweise Durchlässigkeit der Kontaktbereiche 15 für Löschwasser und/oder andere Brandlöschmittel kann hierbei hingenommen werden. Dennoch sind ausdrücklich auch andere Ausführungsformen möglich, welche verlagerbare Innenelemente mit löschmittelundurchlässigen Kontaktbereichen zu weiteren Innenelementen und/oder Außenelementen aufweisen. Zum Beispiel können hierzu Gummi- oder Kunststoffdichtungen an den jeweiligen Innenelementen angeordnet bzw. vorgesehen sein, welche einen Löschmittelaustritt aus den Kontaktbereichen jeweils verhindern oder zumindest reduzieren.

Wie in der Fig. 2b schematisch verdeutlicht, weist das als Teleskopelement ausgebildete Querleitungselement Q1 Verbindungselemente V auf, die in der Fig. 2a lediglich aus Übersichtsgründen nicht gezeigt sind. Die gezeigten Verbindungselemente V dienen jeweils zur mechanischen Verbindung des Querleitungselements Q1 mit Längsleitungselementen und zur Herstellung einer für Löschwasser durchlässigen Verbindung der Innenräume des Querleitungselements Q1 und der Innenräume der mit dem Querleitungselement Q1 zu verbindenden Längsleitungselemente.

Fig. 2c zeigt schematisch eine Expansion des als Teleskopelement ausgebildeten Querleitungselements Q1 bzw. eine Verlagerung der Innenelemente Q11, Q11', Q12, Q12' gegenüber dem Außenelement Q13 bzw. relativ zueinander. Wie in der Fig. 2c schematisch gezeigt, kann die Expansion des Teleskopelements hierbei durch einen physikalischen Druck im Innern des Teleskopelements bewirkt oder zumindest befördert werden, wobei der physikalische Druck durch die Einleitung bzw. das Einpumpen von Löschwasser in das Innere des Teleskopelements hervorgerufen bzw. bewirkt werden kann. Wie in der Fig. 2c schematisch gezeigt kann das durch die Löschwasserzuleitung ins Innere des Teleskopelements eingeleitete Löschwasser eine Verlagerung der Innenelemente aus dem Außenelement heraus bewirken oder befördern, wobei jedoch zumindest ein Teil der Innenelemente durch das Außenelement zumindest teilweise umgeben bzw. umfasst ist. Abhängig von einem Einleitungsdruck mit dem das Löschwasser in das Teleskopelement eingeleitet bzw. eingepumpt wird, kann auch eine durch einen teilweise Austritt des Löschwassers an den Kontaktbereichen 15 der Innenelemente verursachte Teleskopelementinnendruckminderung hingenommen werden, sofern der verbleibende physikalische Druck im Inneren des Teleskopelements zur Bewirkung oder Beförderung einer Verlagerung der Innenelemente Q11, Q11', Q12, Q12' gegenüber dem Außenelement Q13 bzw. relativ zueinander ausreicht.

Alternativ oder ergänzend kann die Verlagerung der Innenelemente gegenüber dem Außenelement bzw. relativ zueinander auch mit einem Seilzugmechanismus (nicht gezeigt) und/oder einem elektromechanisch und/oder pneumatisch angetriebenen Verlagerungsmechanismus (nicht gezeigt) bewirkt oder zumindest befördert werden.

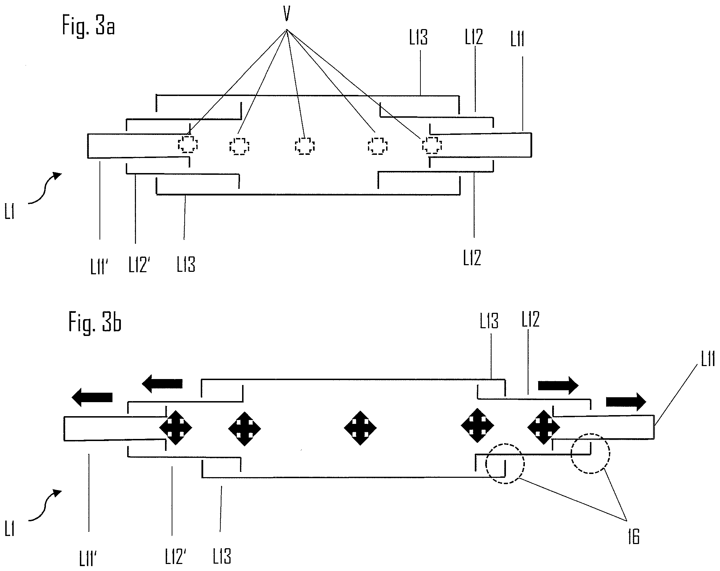

Die Fig. 3 zeigt schematisch ein Beispiel für ein als Teleskopelement ausgebildetes Längsleitungselement L1 mit einem Außenelement L13 und vier zumindest teilweise in dem Außenelement L13 angeordneten Innenelementen L11, L11', L12, L12' in einer Querschnittsansicht. Die in der Fig. 3 gezeigten Innenelemente L11, L11', L12, L12' sind jeweils gegenüber dem Außenelement L13 und gegenüber den jeweils weiteren Innenelementen verlagerbar angeordnet. Im gezeigten Beispiel sind sowohl die Innenelemente L11, L11', L12, L12' als auch das Außenelement L13 als röhrenförmige bzw. zylinderförmige Leitungselemente mit einem kreisrunden Querschnitt ausgebildet, jedoch sind in anderen Ausführungsformen ausdrücklich auch andersartig ausgeformte Innenelemente und/oder Außenelemente, zum Beispiel mit ellipsenförmigen Querschnittsgeometrien, möglich.

Ein jeweils innerstes Innenelement L11, L11' ist zumindest teilweise in einem jeweils weiteren Innenelement L12, L12' angeordnet, wobei die jeweils zumindest teilweise ineinander angeordneten Innenelemente L11, L11', L12, L12' jeweils zumindest teilweise in dem Außenelement L13 positionierbar sind. Die jeweils innersten Innenelemente L11, L11' sind jeweils an einem äußeren Ende verschlossen, sodass das in das Teleskopelement eingeleitete Löschwasser jeweils nicht an diesem äußeren Ende der jeweils innersten Innenelemente L11, L11' austreten kann.

Die zumindest teilweise in dem Außenelement L13 positionierbaren Innenelemente L11, L11', L12, L12' weisen jeweils einen Kontaktbereich 16 zu einem jeweils weiteren Innenelement oder zu dem Außenelement L13 auf. In dem in der Fig. 3 gezeigten Beispiel sind die Kontaktbereiche nicht abgedichtet bzw. für Löschwasser zumindest nicht vollständig undurchlässig. Vielmehr sind die Innenelemente L11, L11', L12, L12' jeweils mit einem Spiel bzw. einem Bewegungsfreiraum ineinander bzw. in dem Außenelement L13 teilweise aufgenommen bzw. angeordnet, sodass eine Verlagerbarkeit der Innenelemente relativ zueinander und relativ zu dem Außenelement gewährleistet ist. Eine zumindest teilweise Durchlässigkeit der Kontaktbereiche 16 für Löschwasser und/oder andere Brandlöschmittel kann hierbei hingenommen werden. Dennoch sind ausdrücklich auch andere Ausführungsformen möglich, welche verlagerbare Innenelemente mit löschmittelundurchlässigen Kontaktbereichen zu weiteren Innenelementen und/oder Außenelementen aufweisen. Zum Beispiel können hierzu Gummi- oder Kunststoffdichtungen an den jeweiligen Innenelementen angeordnet bzw. vorgesehen sein, welche einen Löschmittelaustritt aus den Kontaktbereichen jeweils verhindern oder zumindest reduzieren.

Wie in der Fig. 3a schematisch verdeutlicht, weist das als Teleskopelement ausgebildete Längsleitungselement L1 Verbindungselemente V auf. Die gezeigten Verbindungselemente V dienen jeweils zur mechanischen Verbindung des Längsleitungselements L1 mit Querleitungselementen der Löschmittelleitungsanordnung und zur Herstellung einer für Löschwasser durchlässigen Verbindung der Innenräume des Längsleitungselements L1 und der Innenräume der mit dem Längsleitungselement L1 zu verbindenden Querleitungselemente.

Die Fig. 3b zeigt schematisch eine Expansion des als Teleskopelement ausgebildeten Längsleitungselements L1 bzw. eine Verlagerung der Innenelemente L11, L11', L12, L12' gegenüber dem Außenelement L13 bzw. relativ zueinander. Wie in der Fig. 3b schematisch gezeigt, kann die Expansion des Teleskopelements hierbei durch einen physikalischen Druck im Innern des Teleskopelements bewirkt oder zumindest befördert werden, wobei der physikalische Druck durch die Einleitung bzw. das Einpumpen von Löschwasser in das Innere des Teleskopelements hervorgerufen bzw. bewirkt werden kann. Wie in der Fig. 3b schematisch gezeigt kann das durch die Verbindungselemente V ins Innere des Teleskopelements eingeleitete Löschwasser eine Verlagerung der Innenelemente aus dem Außenelement heraus bewirken oder befördern, wobei jedoch zumindest ein Teil der Innenelemente durch das Außenelement zumindest teilweise umgeben bzw. umfasst ist. Abhängig von einem Einleitungsdruck mit dem das Löschwasser in das Teleskopelement eingeleitet bzw. eingepumpt wird, kann auch eine durch einen teilweise Austritt des Löschwassers an den Kontaktbereichen 16 der Innenelemente verursachte Teleskopelementinnendruckminderung hingenommen werden, sofern der verbleibende physikalische Druck im Inneren des Teleskopelement zur Bewirkung oder Beförderung einer Verlagerung der Innenelemente L11, L11', L12, L12' gegenüber dem Außenelement L13 bzw. relativ zueinander ausreicht.

Alternativ oder ergänzend kann die Verlagerung der Innenelemente gegenüber dem Außenelement bzw. relativ zueinander auch mit einem Seilzugmechanismus (nicht gezeigt) und/oder einem elektromechanisch und/oder pneumatisch angetriebenen Verlagerungsmechanismus (nicht gezeigt) bewirkt oder zumindest befördert werden.

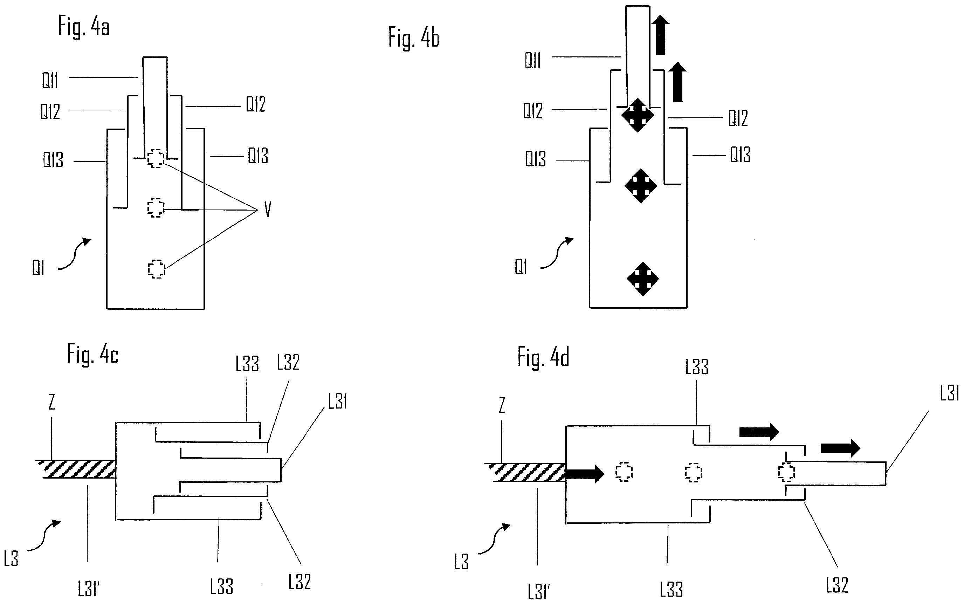

Die Fig. 4 zeigt weitere Beispiele für als Teleskopelemente ausgebildete Querleitungselemente Q1 oder Längsleitungselemente L3. Die in den Fig. 4a bis 4d gezeigten Teleskopelemente umfassen jeweils ein Außenelement Q13, L33 und jeweils zwei zumindest teilweise in dem Außenelement Q13, L33 angeordnete Innenelementen Q11, Q12, L31, L32. Die in der Fig. 2 gezeigten Innenelemente Q11, Q12, L31, L32 sind jeweils gegenüber dem Außenelement Q13, L33 und gegenüber dem jeweils weiteren Innenelement verlagerbar angeordnet. Im gezeigten Beispiel sind sowohl die Innenelemente Q11, Q12, L31, L32 als auch die Außenelemente Q13, L33 als röhrenförmige bzw. zylinderförmige Leitungselemente mit kreisrundem Querschnitt ausgebildet, jedoch sind in anderen Ausführungsformen ausdrücklich auch andersartig ausgeformte Innenelemente und/oder Außenelemente, zum Beispiel mit ellipsenförmigen Querschnittsgeometrien, möglich.

Ein jeweils innerstes Innenelement Q11, L31 ist zumindest teilweise in einem jeweils weiteren Innenelement Q12, L32 angeordnet, wobei die jeweils zumindest teilweise ineinander angeordneten Innenelemente Q11, Q12, L31, L32 jeweils zumindest teilweise in den jeweiligen Außenelement Q13, L33 positionierbar sind. Die jeweils innersten Innenelemente Q11, L31 sind jeweils an einem äußeren Ende verschlossen, sodass das in das Teleskopelement eingeleitete Löschwasser an diesem jeweils äußeren Ende der jeweils innersten Innenelemente Q11, L11 nicht austreten kann.

Wie in der Fig. 4 gezeigt, kann das Teleskopelement insbesondere auch als einseitig ausfahrbares bzw. expandierbares Teleskopelement ausgestaltet sein. Hierzu kann das Außenelement des Teleskopelements an einem äußeren Ende verschlossen oder verschließbar sein, wie in den Fig. 4a und 4b gezeigt, und/oder mit einer Löschmittelzuleitung Z gekoppelt oder koppelbar sein, wie in den Fig. 4c und 4d gezeigt.

Wie in der Fig. 4c gezeigt, kann zum Beispiel ein Außenelement L33 eines als Teleskopelement ausgebildeten Längsleitungselement mit einer Löschmittelzuleitung Z gekoppelt sein. Die Löschmittelzuleitung Z ist an dem Außenelement L33 mechanisch fixiert und dazu ausgebildet, Löschwasser in das Innere des Teleskopelements einzuleiten. Das Außenelement L33 weist hierzu in dem in Fig. 4 gezeigten Beispiel eine entsprechende Löschmittelzuleitungsaufnahme (nicht gezeigt) auf, die eine Löschmitteleinlassöffnung (nicht gezeigt) umfasst. Die Löschmittelzuleitungsaufnahme kann ferner eine Vorrichtung zur Aufnahme der Löschmittelzuleitung Z, zum Beispiel eine Schlauchaufnahme umfassen.

Die zumindest teilweise in dem Außenelement Q13, L33 positionierbaren Innenelemente Q11, Q12, L31, L32 weisen jeweils einen Kontaktbereich zu einem jeweils weiteren Innenelement oder zu dem jeweiligen Außenelement auf. In den in der Fig. 4 gezeigten Beispielen sind die Kontaktbereiche nicht abgedichtet bzw. für Löschwasser zumindest nicht vollständig undurchlässig. Vielmehr sind die Innenelemente Q11, Q12, L31, L32 jeweils mit einem mechanischen Spiel bzw. einem Bewegungsfreiraum ineinander bzw. in dem Außenelement Q13, L33 teilweise aufgenommen bzw. angeordnet, sodass eine Verlagerbarkeit der Innenelemente relativ zueinander und relativ zu dem Außenelement gewährleistet ist. Eine zumindest teilweise Durchlässigkeit der Kontaktbereiche für Löschwasser und/oder andere Löschmittel kann hierbei hingenommen werden. Dennoch sind ausdrücklich auch andere Ausführungsformen möglich, welche verlagerbare Innenelemente mit löschmittelundurchlässigen Kontaktbereichen zu weiteren Innenelementen und/oder Außenelementen aufweisen. Zum Beispiel können hierzu Gummi- oder Kunststoffdichtungen an den jeweiligen Innenelementen angeordnet bzw. vorgesehen sein, welche einen Löschmittelaustritt aus den Kontaktbereichen jeweils verhindern oder zumindest reduzieren.

Wie in den Fig. 4a und 4d schematisch verdeutlicht, weisen die als Teleskopelemente ausgestalteten Längs- oder Querleitungselemente jeweils Verbindungselemente V auf, die in den Fig. 4b und 4c aus Übersichtsgründen nicht gezeigt sind. Die gezeigten Verbindungselemente V dienen jeweils zur mechanischen Verbindung der Querleitungselemente und Längsleitungselemente und zur Herstellung einer für Löschwasser durchlässigen Verbindung der Innenräume der Querleitungselemente und der Längsleitungselemente.

Die Fig. 4c. und 4d. zeigen schematisch eine Expansion der Teleskopelemente bzw. eine Verlagerung der Innenelemente Q11, Q12, L31, L32 gegenüber den jeweiligen Außenelement Q13, L33 bzw. relativ zueinander. Die Expansion der Teleskopelemente kann hierbei, analog zu den in den Fig. 2 und 3 gezeigten Teleskopelementen, durch einen physikalischen Druck im Inneren des Teleskopelements bewirkt oder zumindest befördert werden, wobei der physikalische Druck durch die Einleitung bzw. das Einpumpen von Löschwasser in das Innere des jeweiligen Teleskopelements hervorgerufen bzw. bewirkt werden kann.

Abhängig von einem Einleitungsdruck mit dem das Löschwasser in das Teleskopelement eingeleitet bzw. eingepumpt wird, kann auch eine durch einen teilweise Austritt des Löschwassers an den Kontaktbereichen der Innenelemente verursachte Teleskopelementinnendruckminderung hingenommen werden, sofern der verbleibende physikalische Druck im Inneren des Teleskopelements zur Bewirkung oder Beförderung einer Verlagerung der Innenelemente Q11, Q12, L31, L32 gegenüber den jeweiligen Außenelementen Q13, L33 bzw. relativ zueinander ausreicht.

Alternativ oder ergänzend kann die Verlagerung der Innenelemente gegenüber dem Außenelement bzw. relativ zueinander auch mit einem Seilzugmechanismus (nicht gezeigt) und/oder einem elektromechanisch und/oder pneumatisch angetriebenen Verlagerungsmechanismus (nicht gezeigt) bewirkt oder zumindest befördert werden.

Abweichend zu den in den Fig. 2 bis 4 gezeigten Beispielen für als Teleskopelemente ausgebildete Längsleitungselemente und Querleitungselemente sind ausdrücklich auch Teleskopelemente mit einer abweichenden Anzahl von Innenelementen möglich. In einer Variante kann ein als Teleskopelement ausgebildetes Längs- oder Querleitungselement zum Beispiel lediglich ein einziges Innenelement umfassen, welches zumindest teilweise von einem Au-ßenelement umgeben und gegenüber diesem verlagerbar ist.

In einer anderen Variante kann ein als Teleskopelement, insbesondere als einseitig expandierbares Teleskopelement, ausgebildetes Längs- oder Querleitungselement zum Beispiel vier relativ zueinander verlagerbare Innenelemente und ein Außenelement aufweisen, wobei die vier Innenelemente jeweils zumindest teilweise in einem jeweils weiteren der Innenelemente und/oder zumindest teilweise in dem Außenelement angeordnet sind.

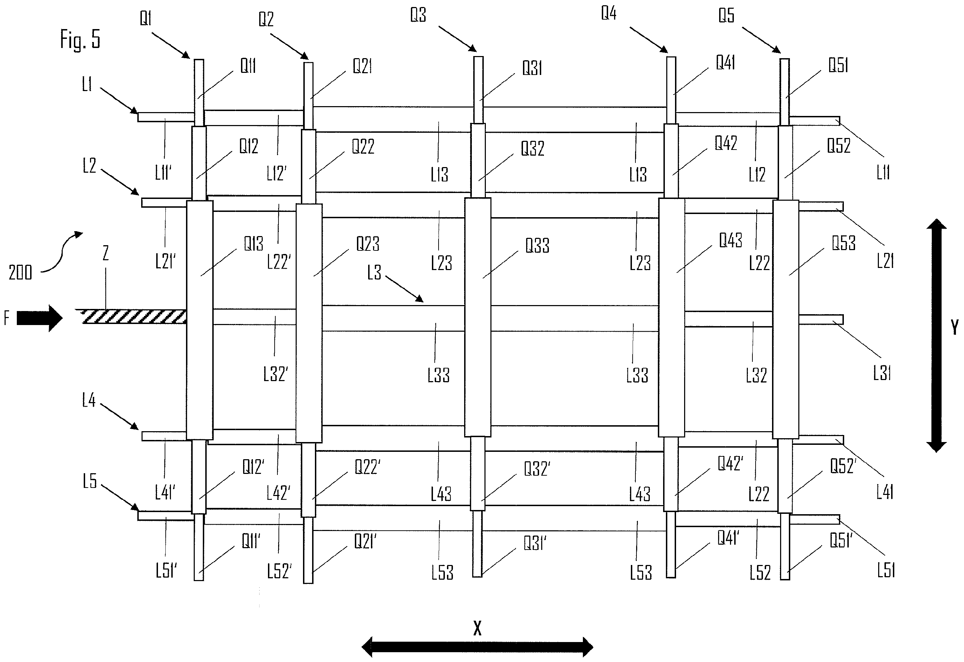

Die Fig. 5 zeigt ein Beispiel für eine Löschmittelleitungsanordnung 200 mit fünf Längsleitungselementen L1, L2, L3, L4, L5 und fünf Querleitungselementen Q1, Q2, Q3, Q4, Q5 in einer Draufsichtsansicht, wobei die Längs- und Querleitungselemente jeweils als Teleskopelemente mit röhrenförmigen Innen- und Außenelementen ausgebildet sind. Es sind jedoch ausdrücklich auch Ausführungsformen der Löschmittelleitungsanordnung 200 mit einer beliebigen Anzahl von als Teleskopelementen ausgebildeten Längs- und Querleitungselementen möglich, wobei eine jeweilige Anzahl der Längsleitungselemente und der Querleitungselemente identisch oder unterschiedlich sein kann.

Die Fig. 5 zeigt die Löschmittelleitungsanordnung 200 mit zumindest teilweise aus den jeweiligen Außenelementen Q13, Q23, Q33, Q43, Q53, L13, L23, L33, L43, L53 herausverlagerten Innenelementen. Die in der Fig. 5 schematisch in einer Draufsicht gezeigte Löschmittelleitungsanordnung 200 befindet sich in einem Betriebszustand, wobei die als Teleskopelemente ausgebildeten Quer- und Längsleitungselemente L1, L2, L3, L4, L5, Q1, Q2, Q3, Q4, Q5 gegenüber einem Transportzustand der Löschmittelleitungsanordnung 200 jeweils ausgefahren bzw. expandiert sind. Mit anderen Worten kann beschrieben werden, dass eine von den Längsleitungselementen und den Querleitungselementen im Zusammenwirken umgrenzte Fläche während eines Betriebszustands der Löschmittelleitungsanordnung 200 gegenüber einem Transportzustand der Löschmittelleitungsanordnung 200 vergrößert sein kann, wobei die Vergrößerung insbesondere durch eine Verlagerung von (Teleskop-)Innenelementen gegenüber (Teleskop-)Außenelementen bewirkt werden kann. Es kann somit beschrieben werden, dass die Löschmittelleitungsanordnung in einem Betriebszustand gegenüber einem Transportzustand in einer ersten Richtung X und in einer zur ersten Richtung X orthogonalen zweiten Richtung Y ausgedehnt bzw. vergrößert werden kann.

Das expandieren der Löschmittelleitungsanordnung 200 von einem Transportzustand in den gezeigten Betriebszustand kann vor oder während eines Betriebs geschehen.

In dem in Fig. 5 gezeigten Beispiel umfasst die Löschmittelleitungsanordnung 200 jeweils beidseitig expandierbare als Teleskopelemente ausgebildete Quer- und Längsleitungselemente L1, L2, L3, L4, L5, Q1, Q2, Q3, Q4, Q5, wie sie beispielhaft in den Fig. 2 und 3 gezeigt werden. In einer anderen Ausführungsform kann jedoch zum Beispiel auch eine Anordnung von einseitig expandierbaren Teleskopelementen, wie sie beispielhaft in der Fig. 4 gezeigt werden, die Löschmittelleitungsanordnung ausbilden.

Ferner zeigt die Fig. 5 eine Löschmittelzuleitung Z, die an einem Querleitungselement Q1 angeordnet ist, wie es beispielhaft auch in der Fig. 3 gezeigt ist. Jedoch kann die Löschmittelzuleitung Z in anderen Ausführungsformen auch an einem der Längsleitungselemente angeordnet werden, wie es zum Beispiel in der Fig. 4 gezeigt ist.

Aus Übersichtsgründen ist in der Fig. 5 auf die Darstellung der Verbindungselemente V, welche, analog zum in Fig. 1 gezeigten Beispiel, die Längsleitungselemente L1, L2, L3, L4, L5 mit den Querleitungselementen Q1, Q2, Q3, Q4, Q5 mechanisch verbinden, verzichtet worden. Die hier nicht dargestellten Verbindungselemente V ermöglichen auch bei der in der Fig. 5 gezeigten Löschmittelleitungsanordnung 200 die Überleitung von Löschwasser von den Längsleitungselementen in die Querleitungselemente oder von den Querleitungselementen in die Längsleitungselemente.

Bei einer Verlagerung der jeweiligen Innenelemente eines Teleskopelements gegenüber dem jeweiligen Außenelement des Teleskopelements kann sich ein Abstand zweier Verbindungselemente zueinander jeweils verändern, wie es auch in den Fig. 2 bis 4 gezeigt ist. Da die Verbindungselemente jeweils mechanisch belastbar an den jeweiligen Längs- und Querleitungselementen befestigt sind, können die Verbindungselemente eine gleichförmige bzw. miteinander synchronisierte Expansion bzw. Verlagerung der Innenelemente der jeweiligen Längs- und Querleitungselemente gewährleisten bzw. erzwingen.

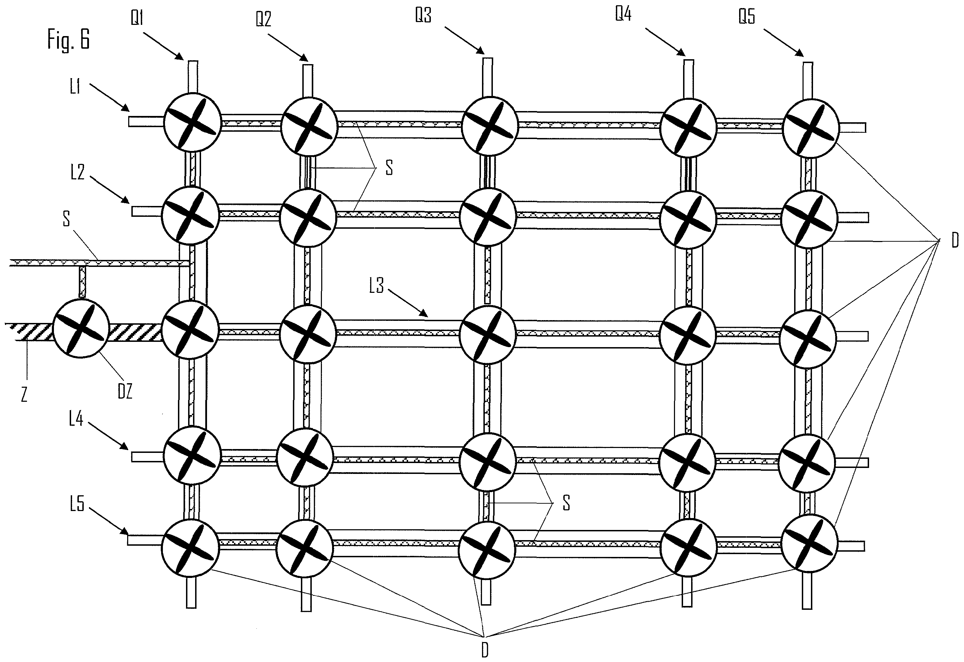

Die Fig. 6 zeigt eine Löschmittelleitungsanordnung 200 nach der Fig. 5, wobei mehrere flugfähige Trägervorrichtungen D an der Löschmittelleitungsanordnung 200 angeordnet bzw. mechanisch belastbar mit dieser verbunden sind. In einem anderen Ausführungsbeispiel können die flugfähigen Trägervorrichtungen D zum Beispiel auch an der in der Fig. 1 gezeigten Löschmittelleitungsanordnung 100 angeordnet sein.

Im gezeigten Beispiel sind die flugfähigen Trägervorrichtungen D jeweils im Bereich der Kreuzungspunkte der Quer- und Längsleitungsvorrichtungen angeordnet bzw. befestigt, wobei dieses nicht in allen Ausführungsformen notwendig ist.

Die Anzahl und die Positionierung der flugfähigen Trägervorrichtungen D können in Abhängigkeit der Abmessungen und/oder des Gewichts der Löschmittelleitungsanordnung und des ihr zugeführten Löschwassers und/oder anderen Brandlöschmittels bestimmt werden. Ferner kann auch eine gewünschte zu erreichende Flughöhe oder eine gewünschte Fluggeschwindigkeit bei der Positionierung und/oder Dimensionierung der einzelnen flugfähigen Trägervorrichtungen D berücksichtigt werden.

Die flugfähigen Trägervorrichtungen D sind im gezeigten Beispiel handelsübliche Helikopterdrohnen, welche jeweils einzeln und/oder im Zusammenwirken dazu geeignet sind, eine Löschmittelleitungsanordnung gemeinsam mit den mit ihr mechanisch verbundenen Vorrichtungselementen anzuheben und die Löschmittelleitungsanordnung gemeinsam mit den mit ihr mechanisch verbundenen Vorrichtungselementen, quasi schwebend, in einer vorbestimmten Position in der Erdatmosphäre zu halten.

Ferner zeigt die Fig. 6, dass die flugfähigen Trägervorrichtungen D jeweils mit einer Steuer- und Energieversorgungsleitung S verbunden sind, welche den Einsatz einer bodengebundenen Steuerungseinrichtung und einer Energieversorgungseinrichtung zur Steuerung und Energieversorgung der flugfähigen Trägervorrichtungen D erlaubt. Die Steuer- und Energieversorgungsleitung S ist im gezeigten Beispiel als kombiniertes Daten- und Energieübertragungskabel ausgebildet, jedoch ist dieses nicht in allen Ausführungsformen notwendig. Insbesondere können eine Steuerleitung und eine Energieversorgungsleitung auch separat voneinander ausgebildet werden. Ferner ist es auch möglich, ein Bündel von einzelnen Steuerleitungen und/oder Energieversorgungsleitungen, welche jeweils mit einer flugfähigen Trägervorrichtung und/oder einer Gruppe von flugfähigen Trägervorrichtungen verbunden sind, zur Steuerung und/oder Energieversorgung der flugfähigen Trägervorrichtungen vorzusehen.

Weiter zeigt die Fig. 6, dass eine flugfähige Zuleitungsträgervorrichtung DZ an der Löschmittelzuleitung Z angeordnet bzw. mechanisch an dieser befestigt ist. Die flugfähige Zuleitungsträgervorrichtung DZ kann die Löschmittelzuleitung Z zumindest teilweise anheben und/oder ein Anheben oder Halten der Löschmittelzuleitung Z zumindest unterstützen. Da insbesondere die mit Brandlöschmittel gefüllte Löschmittelzuleitung Z ein nicht unerhebliches Gewicht aufweisen kann, können die flugfähigen Trägervorrichtungen D, welche die Löschmittelleitungsanordnung gemeinsam mit den mit ihr mechanisch verbundenen Vorrichtungselementen anheben oder halten, durch die Verwendung von Zuleitungsträgervorrichtungen DZ, die an der Löschmittelzuleitung Z angeordnet sind, zumindest entlastet werden.

Ferner zeigt die Fig. 6, dass auch die Zuleitungsträgervorrichtung DZ mit der Steuer- und Energieversorgungsleitung S verbunden ist, sodass auch die Zuleitungsträgervorrichtung DZ von einer bodengebundenen Steuerungseinrichtung und einer bodengebundenen Energieversorgungseinrichtung mit Steuersignalen und Betriebsenergie versorgt werden kann.

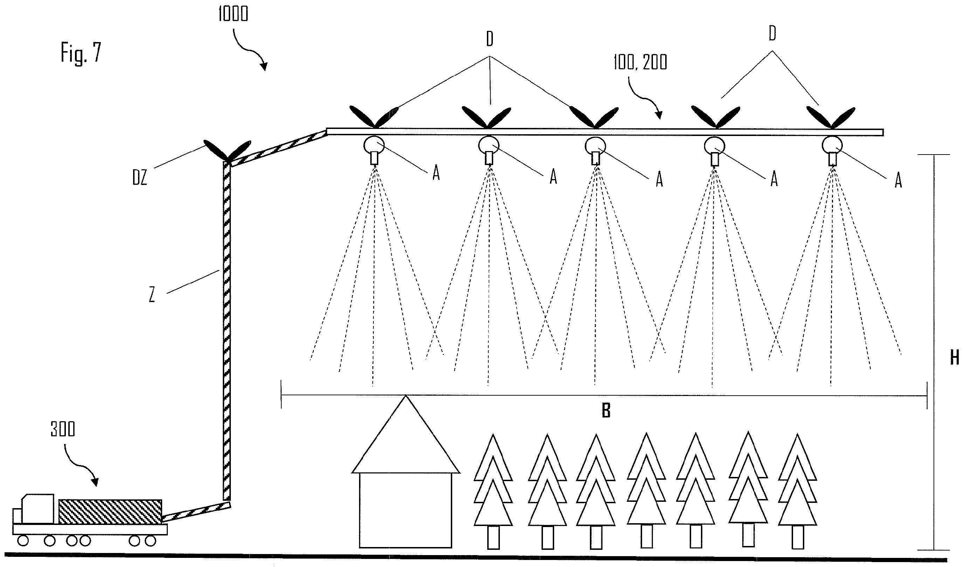

Die Fig. 7 zeigt beispielhaft und schematisiert eine Brandlösch- oder Brandpräventionsvorrichtung 1000 während eines Brandlösch- oder Brandpräventionsbetriebs. Eine Löschmittelleitungsanordnung 100, 200, wie sie in den vorangehenden Fig. gezeigt ist, ist von mehreren flugfähigen Trägervorrichtungen D in einen Abstand H, zum Beispiel 100 Meter, zur Erdoberfläche angehoben und dort gehalten bzw. positioniert. Mit anderen Worten kann beschrieben werden, dass zwischen der Erdoberfläche bzw. einem Einsatzbereich B und der Brandlösch- oder Brandpräventionsvorrichtung 1000 zumindest im Wesentlichen keine Relativgeschwindigkeit auftritt.

Die in der Fig. 7 gezeigte Brandlösch- oder Brandpräventionsvorrichtung 1000 mit den mehreren flugfähigen Trägervorrichtungen D ist dazu eingerichtet, von einer bodengebundenen Steuerungsvorrichtung (nicht gezeigt) gesteuert zu werden, wobei insbesondere eine Positionierung der Löschmittelleitungsanordnung 100, 200 mit den mehreren flugfähigen Trägervorrichtungen D oberhalb der Erdoberfläche vorgenommen werden kann. Mit anderen Worten kann beschrieben werden, dass die mehreren flugfähigen Trägervorrichtungen D im gezeigten Beispiel dazu eingerichtet sind, die Löschmittelleitungsanordnung 100, 200 und die mit ihr mechanisch verbundenen Vorrichtungselemente im dreidimensionalen Raum, entsprechend der Steuersignale einer automatisierten und/oder manuell bedienbaren Steuerung, zu repositionieren. Hierzu können einzelne flugfähige Trägervorrichtungen, Gruppen von flugfähigen Trägervorrichtungen oder alle Trägervorrichtungen in ihrem Flugverhalten beeinflusst werden. Insbesondere können auch einzelne Parameter der jeweiligen flugfähigen Trägervorrichtungen D wie zum Beispiel eine Rotorleistung und/oder ein Rotoranstellwinkel automatisiert oder bedienerinduziert von einer bodengebundenen Steuervorrichtung gesteuert und/oder geregelt werden.

Die flugfähigen Trägervorrichtungen D werden im dem in Fig. 7 gezeigten Beispiel von der bodengebundenen Steuerungsvorrichtung (nicht gezeigt) gesteuert und von einer bodengebundenen Energieversorgungsvorrichtung (nicht gezeigt), zum Beispiel einem Stromversorgungsnetzanschluss oder einer verlegefähigen Generatoreinheit, mit Betriebsenergie versorgt. Die Steuersignale der Steuerungsvorrichtung und die Betriebsenergie werden den flugfähigen Trägervorrichtungen D über eine kombinierte Energieversorgungs- und Datenleitung zugeführt, welche im gezeigten Beispiel gemeinsam mit einer Löschmittelzuleitung Z ausgebildet ist bzw. an dieser angeordnet ist.

Ferner zeigt die Fig. 7, dass die, über einem mit Löschwasser oder einem anderen Brandlöschmittel zu beregnende bzw. zu besprühende Einsatzbereich B, welcher ein vorbestimmter oder vorbestimmbarer Teil der Erdoberfläche ist, positionierte, Löschmittelleitungsanordnung 100, 200 über die Löschmittelzuleitung Z mit einem Löschmittelreservoir 300, im gezeigten Beispiel mit einem wassergefüllten Tanklastkraftwagen, verbunden ist.

Der in der Fig. 7 gezeigte Tanklastkraftwagen umfasst eine handelsübliche Hochdruckpumpe, welche das Löschwasser in die Löschmittelzuleitung Z einpumpt. Die Hochdruckpumpe ist hierbei dazu eingerichtet, einen Wasserdruck zu erzeugen, der das Löschwasser, entgegen der auf das Löschwasser wirkenden Schwerkraft und entgegen der in der Löschmittelzuleitung Z auftretenden Reibungs- und Fließwiderstände, in die Löschmittelleitungsanordnung 100, 200 einpumpt.

Ferner zeigt die Fig. 7, dass die Löschmittelzuleitung Z von einer an ihr angeordneten Zuleitungsträgervorrichtung DZ in einer vorbestimmten Position in der Erdatmosphäre gehalten wird. Die gezeigte Zuleitungsträgervorrichtung DZ wird im gezeigten Beispiel ebenfalls durch die gemeinsam mit der Löschmittelzuleitung Z ausgebildete kombinierte Energieversorgungs- und Datenleitung mit Betriebsenergie und Steuersignalen versorgt. Durch das Halten der Löschmittelzuleitung Z entlastet die Zuleitungsträgervorrichtung DZ die mehreren flugfähigen Trägervorrichtungen D.

Ein Vorteil der in der Fig. 7 gezeigten Brandlösch- oder Brandpräventionsvorrichtung 1000 ist es, dass diese kontinuierlich und quasi-unendlich mit Betriebsenergie, Steuersignalen und Brandlöschmittelen, insbesondere mit Löschwasser, versorgt werden kann, sodass ein Brandlösch- oder Brandpräventionsbetrieb kontinuierlich und zeitlich unbefristet erfolgen kann.

Das aus dem Löschmittelreservoir 300 über die Löschmittelzuleitung Z in die Löschmittelleitungsanordnung 100, 200 gepumpte Löschwasser wird von der in der Fig. 7 gezeigten Brandlösch- oder Brandpräventionsvorrichtung kontinuierlich ausgeleitet und gleichmäßig über den Einsatzbereich B verteilt. Hierdurch wird, ähnlich einem plötzlich auftretenden Starkregen, eine Brand, insbesondere ein Flächenbrand, wirksam bekämpft und/oder der Einsatzbereich B derart befeuchtet, dass einem Übergreifen eines Brandes, insbesondere eines Flächenbrandes, zumindest entgegengewirkt wird.

Zur Ausleitung des Löschwassers umfasst die in der Fig. 7 gezeigte Vorrichtung mehrere Auslässe A, die jeweils als Sprühdüsen ausgebildet und an der Löschmittelleitungsanordnung 100, 200 angeordnet sind. Die an der Löschmittelleitungsanordnung 100, 200 angeordneten Sprühdüsen sind jeweils dazu angeordnet und ausgebildet, das in die Löschmittelleitungsanordnung 100, 200 gepumpte Löschwasser aus der Löschmittelleitungsanordnung 100, 200 auszuleiten und das ausgeleitete Löschwasser hierbei über den Einsatzbereich B zumindest teilweise flächig zu verteilen bzw. zu streuen.

Die Sprühdüsen bzw. Auslässe A sind hierzu jeweils gegenüberliegend zu den flugfähigen Trägervorrichtungen D an einer Außenseite der Löschmittelleitungsanordnung 100, 200 angeordnet. Dieses ist jedoch ausdrücklich nicht in allen Ausführungsformen notwendig.

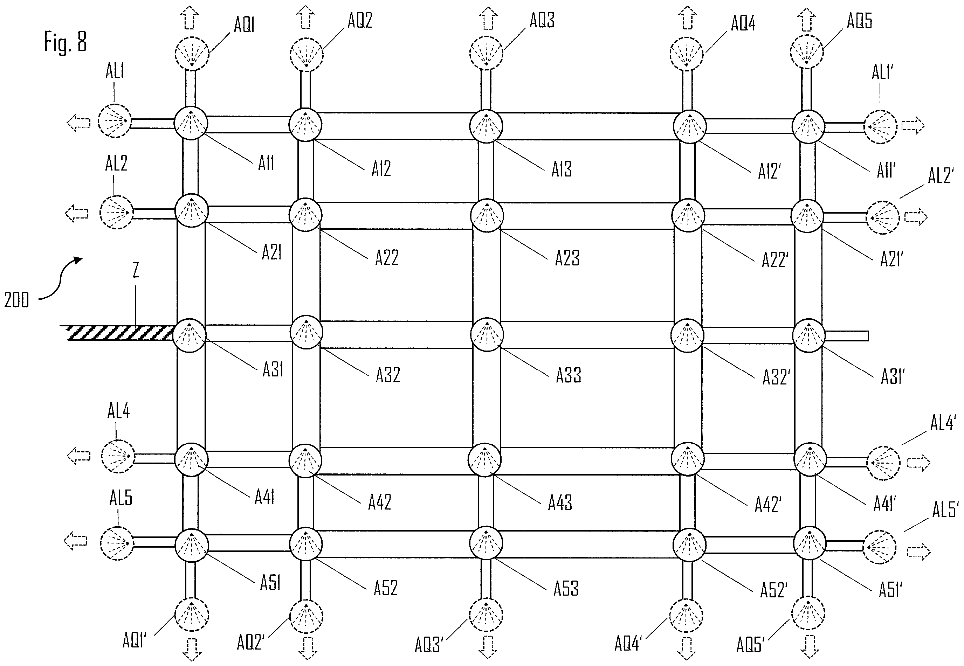

Die Fig. 8 zeigt ein weiteres Beispiel für die Anordnung der Auslässe A11...A51' an einer Löschmittelleitungsanordnung 200, wie sie zum Beispiel in der Fig. 5 und der Fig. 6 gezeigt ist. Die Auslässe A11...A51' sind in im Fig. 8 gezeigten Beispiel jeweils an den Innenelementen oder an den Außenelementen der jeweils als Teleskopelemente ausgebildeten Längsleitungselemente angeordnet. In anderen Ausführungsformen können auch die Querleitungselemente und/oder die Verbindungselemente Auslässe zu Abgabe von Brandlöschmittel, insbesondere von Löschwasser aufweisen.

Die in der Fig. 8 gezeigten Auslässe A11...A51' sind an der Löschmittelleitungsanordnung 200 jeweils gegenüberliegen zu den flugfähigen Trägervorrichtungen D (in der Fig. 8 aus Übersichtsgründen nicht gezeigt) angeordnet und als Löschmittelsprühdüsen ausgebildet. Mit anderen Worten kann beschrieben werden, dass die jeweils als Löschmittelsprühdüsen ausgebildeten Auslässe an einer den flugfähigen Trägervorrichtungen D abgewandten Außenseite der Löschmittelleitungsanordnung 200 angeordnet sind. Dieses ist jedoch ausdrücklich nicht bei jeder Ausführungsform der Vorrichtung notwendig.

Ferner sind die in der Fig. 8 gezeigten und als Löschmittelsprühdüsen ausgebildeten Auslässe A11...A51' jeweils dazu geeignet, das Löschwasser aus dem Inneren der Längsleitungselemente auszulassen, wobei die als Teleskopelemente ausgebildeten Längsleitungselemente hierzu jeweils Ausnehmungen in den Innen- bzw. Außenelementen aufweisen, die eine Zuleitung des Löschwassers an die Löschmittelsprühdüsen ermöglichen. In anderen Ausführungsformen können die Auslässe A11...A51' auch unmittelbar durch Ausnehmungen in den Längsleitungs- und/oder Querleitungselementen ausgebildet sein.

Die in der Fig. 8 gezeigten Löschmittelsprühdüsen A11...A51' sind zudem dazu angeordnet und ausgebildet, das Löschwasser und/oder ein anderes Brandlöschmittel zumindest im Wesentlichen senkrecht zur Erdoberfläche aus der Löschmittelleitungsanordnung 200 bzw. aus den Längsleitungselementen auszuleiten. Ist die Löschmittelleitungsanordnung 200 während der Ausleitung des Löschwassers bzw. Brandlöschmittels in einem Abstand, zum Beispiel in einem Abstand von einhundert Metern, zur Erdoberfläche positioniert bzw. angehoben oder gehalten, so verteilt sich das im Wesentlichen senkrecht zur Erdoberfläche ausgeleitete Löschwasser bzw. Brandlöschmittel selbstständig bzw. allein aufgrund des natürlichen Luftwiderstandes auf seinem Weg hin zur Erdoberfläche über einen Einsatzbereich B, wobei die durch die Löschmittelausleitung bewirkten Impulse und Kräfte, welche jeweils auf die Löschmittelleitungsanordnung 200 einwirken, zumindest im Wesentlichen parallel zur Erdanziehungskraft auf die Löschmittelleitungsanordnung 200 einwirken. Die durch die Löschmittelausleitung bewirkten Impulse und Kräfte können von den flugfähigen Trägervorrichtungen D somit leicht kompensiert werden. Optional kann die Steuervorrichtung dazu eingerichtet sein, die durch die Löschmittelausleitung bewirkten Impulse und Kräfte automatisiert durch eine Betriebsleistungsanpassung der flugfähigen Trägervorrichtungen D zu kompensieren.

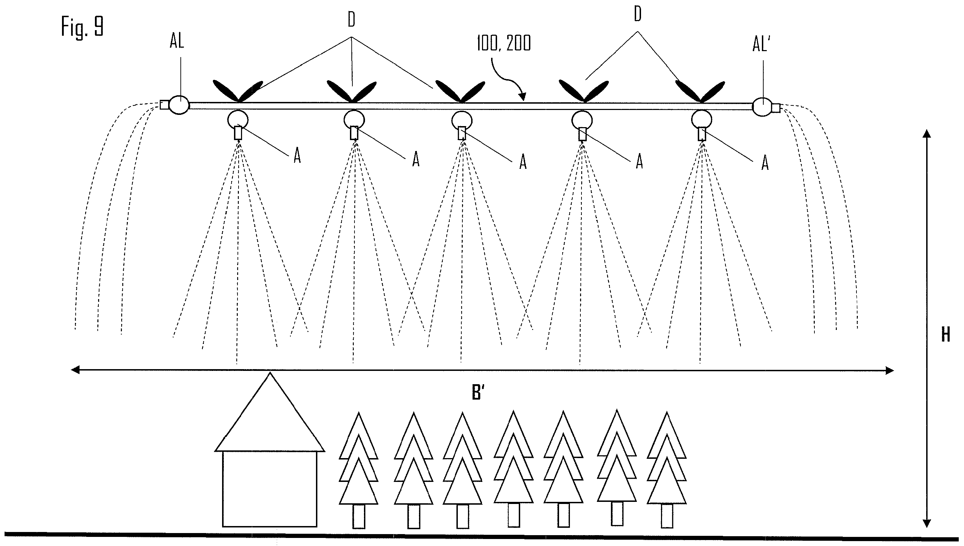

Als eine mögliche optionale Weiterbildung zeigt die Fig. 8 zusätzlich noch seitlich an der Löschmittelleitungsanordnung 200 bzw. an den Längs- und Querleitungselementen angeordnete Seitenlöschmittelsprühdüsen AQ1... AQ5' und AL1... AL5'. Die optional implementierbaren Seitenlöschmittelsprühdüsen AQ1... AQ5' und AL1... AL5' sind jeweils steuerbare bzw. verschließbare Löschmittelsprühdüsen, welche insbesondere während einer Verlagerung der jeweiligen Innenelemente der jeweils als Teleskopelemente ausgebildeten Längs- und Querleitungselemente verschließbar oder verschlossen bzw. für das Brandlöschmittel undurchlässig sind. Vorzugsweise können die Seitenlöschmittelsprühdüsen AQ1... AQ5' und AL1... AL5', wie in der Fig. 8 gezeigt, jeweils paarweise und einander gegenüberliegend seitlich an einem jeweiligen Längs- und Querleitungselement der Löschmittelleitungsanordnung 200 angeordnet sein. Die in der Fig. 8 gezeigten Seitenlöschmittelsprühdüsen AQ1... AQ5' und AL1... AL5' sind jeweils dazu angeordnet und ausgebildet, das Löschwasser bzw. Brandlöschmittel aus dem Inneren der jeweiligen Längs- und Querleitungselementen zumindest im Wesentlichen parallel zur Erdoberfläche abzugeben. Wie in der nachfolgenden Fig. 9 schematisch gezeigt, kann hierdurch der durch die Brandlösch- oder Brandpräventionsvorrichtung mit Löschwasser bzw. Brandlöschmittel abzudeckende Einsatzbereich B weiter vergrößert werden, wobei die durch den seitlichen Löschwasser- bzw. Brandlöschmittelauslass bewirkten Impulse bzw. Kräfte, welche auf die gezeigte Löschmittelleitungsanordnung einwirken, jeweils zumindest teilweise gegeneinander aufgehoben werden. Durch die zumindest teilweise einander entgegensetzten Impulse bzw. Kräfte, welche sich zumindest teilweise gegeneinander aufwiegen, wird eine Steuerung oder Regelung der flugfähigen Trägervorrichtungen D im Vergleich zu einer asymmetrischen bzw. nicht paarweisen Anordnung von Seitenlöschmittelsprühdüsen an der Löschmittelleitungsanordnung erleichtert.

Ferner können die in der Fig. 8 gezeigten Auslässe A11...A51', AQ1... AQ5' und AL1... AL5' dazu eingerichtet sein, jeweils einzeln oder gruppenweise automatisiert und/oder bedienerinduziert von der Steuerungsvorrichtung gesteuert oder geregelt, insbesondere geöffnet oder geschlossen bzw. aktiviert oder deaktiviert zu werden. Die Steuerung oder Regelung der Auslässe kann hierbei durch die Steuerungsvorrichtung insbesondere mit einer Steuerung oder Regelung der flugfähigen Trägervorrichtungen D verknüpft und/oder korreliert sein. Mit anderen Worten kann beschrieben werden, dass bei einer, insbesondere automatisierten, Steuerung oder Regelung der flugfähigen Trägervorrichtungen D ein Betriebszustand der einzelnen Auslässe berücksichtigt werden kann.

Es versteht sich, dass die zuvor erläuterten beispielhaften Ausführungsformen nicht abschließend sind und den hier offenbarten Gegenstand nicht beschränken. Insbesondere ist für den Fachmann ersichtlich, dass er die beschriebenen Merkmale beliebig miteinander kombinieren kann und/oder verschiedene Merkmale weglassen kann, ohne dabei von dem hier offenbarten Gegenstand abzuweichen.

## Patentansprüche

1. Eine Brandlösch- oder Brandpräventionsvorrichtung (1000), umfassend
- eine Löschmittelleitungsanordnung (100, 200) mit
• mehreren Längsleitungselementen (L1, L2, L3, L4, L5), welche jeweils zur Durchleitung eines Brandlöschmittels geeignet sind, und
• mehreren Querleitungselementen (Q1, Q2, Q3, Q4, Q5), welche jeweils zur Durchleitung eines Brandlöschmittels geeignet sind, wobei
jedes der Längsleitungselemente (L1, L2, L3, L4, L5) mit zumindest einem der Querleitungselemente (Q1, Q2, Q3, Q4, Q5) durch zumindest ein Verbindungselement (V) verbunden ist, wobei
die Verbindungselemente (V) jeweils dazu geeignet sind, zumindest einen Teil des Brandlöschmittels von einem der Längsleitungselemente (L1, L2, L3, L4, L5) in eines der Querleitungselemente (Q1, Q2, Q3, Q4, Q5) oder von einem der Querleitungselemente (Q1, Q2, Q3, Q4, Q5) in eines der Längsleitungselemente (L1, L2, L3, L4, L5) zu leiten;
- zumindest eine Löschmittelzuleitung (Z), welche an der Löschmittelleitungsanordnung (100, 200) angeordnet und dazu geeignet ist, das Brandlöschmittel in zumindest eines der Längsleitungselemente (L1, L2, L3, L4, L5) oder der Querleitungselemente (Q1, Q2, Q3, Q4, Q5) einzuleiten;
- mehreren Auslässen (A), welche jeweils an der Löschmittelleitungsanordnung (100, 200) angeordnet und dazu geeignet sind, das Brandlöschmittel aus der Löschmittelleitungsanordnung (100, 200) auszuleiten;
- zumindest eine flugfähige Trägervorrichtung (D), welche an der Löschmittelleitungsanordnung (100, 200) angeordnet und dazu geeignet ist, die Löschmittelleitungsanordnung (100, 200) mit den Auslässen (A) und zumindest einem Teil der Löschmittelzuleitung (Z) während eines Brandlösch- oder Brandpräventionsbetriebs der Brandlösch- oder Brandpräventionsvorrichtung (1000) in einen Abstand (H) zur Erdoberfläche anzuheben und zumindest zeitweise in einem Abstand (H) zur Erdoberfläche zu halten; und
- ein bodengebundenes Löschmittelreservoir (300), welches mit der Löschmittelzuleitung (Z) verbunden und dazu geeignet ist, das Brandlöschmittel bereitzustellen und in die Löschmittelzuleitung (Z) einzuleiten und hierdurch der Löschmittelleitungsanordnung (100, 200) das Brandlöschmittel während eines Brandlösch- oder Brandpräventionsbetriebs der Brandlösch- oder Brandpräventionsvorrichtung (1000) zuzuleiten;
**gekennzeichnet durch**
- zumindest eine Betriebsenergiezuleitung, welche mit der zumindest einen flugfähigen Trägervorrichtung (D) verbunden und dazu eingerichtet ist, die zumindest eine flugfähige Trägervorrichtung (D) mit elektrischer Betriebsenergie zu versorgen, wobei
die Betriebsenergiezuleitung ferner mit einer stationären oder verlegefähigen bodengebundenen Energieversorgungseinrichtung verbunden ist.

2. Eine Vorrichtung (1000) nach dem Anspruch 1, **dadurch gekennzeichnet, dass**,
zumindest ein Teil der Auslässe (A) als Löschmittelsprühdüsen oder Löschmittelberegnungsdüsen ausgebildet ist, und/oder
zumindest ein Teil der Auslässe (A) das Brandlöschmittel senkrecht zur Erdoberfläche ausleitet.

3. Eine Vorrichtung (1000) nach dem Anspruch 1 oder 2, wobei
zumindest ein Teil der Auslässe (AL) dazu geeignet ist, das Brandlöschmittel parallel zur Erdoberfläche auszuleiten,
**dadurch gekennzeichnet, dass**
eine durch ein zumindest im Wesentlichen parallel zur Erdoberfläche ausgeleitetes Brandlöschmittel hervorgerufene Gegenkraft, welche auf die Löschmittelleitungsanordnung (100, 200) wirkt, von einer der Gegenkraft entgegengesetzten Kraft, welche ebenfalls durch ein Ausleiten von Brandlöschmittel hervorgerufen wird, zumindest teilweise kompensiert wird.

4. Eine Vorrichtung (1000) nach einem der Ansprüche 1 bis 3, wobei
das bodengebundene Löschmittelresevoir (300) ein Tankwagen oder ein Wasserbehälter ist.

5. Eine Vorrichtung (1000) nach einem der Ansprüche 1 bis 4, weiter umfassend
zumindest eine flugfähige Zuleitungsträgervorrichtung (DZ), welche an der Löschmittelzuleitung (Z) angeordnet und dazu geeignet ist, zumindest einen Teil der Löschmittelzuleitung (Z) in einen Abstand zur Erdoberfläche anzuheben und zumindest zeitweise in einem Abstand zur Erdoberfläche zu halten,
**dadurch gekennzeichnet, dass**
die Löschmittelzuleitung (Z) mit dem Löschmittelreservoir (300) verbunden ist, welches dazu geeignet ist, der Löschmittelleitungsanordnung (100, 200) das Brandlöschmittel zuzuleiten, während die Löschmittelzuleitung (Z) von der zumindest einen flugfähigen Zuleitungsträgervorrichtung (DZ) angehoben oder gehalten ist.

6. Eine Vorrichtung (1000) nach einem der Ansprüche 1 bis 5, **dadurch gekennzeichnet, dass**,
die zumindest eine flugfähige Trägervorrichtung (D) ein unbemanntes Luftfahrzeug, UAV, insbesondere eine Drohne, ist.

7. Eine Vorrichtung (1000) nach einem der Ansprüche 1 bis 6, weiter umfassend
zumindest eine Steuerleitung (S), welche mit der zumindest einen flugfähigen Trägevorrichtung (D) verbunden und dazu eingerichtet ist, der zumindest einen flugfähigen Trägervorrichtung (D) ein Steuersignal zuzuleiten,
**dadurch gekennzeichnet, dass**
die Steuerleitung (S) mit einer stationären oder verlegefähigen Steuervorrichtung verbunden ist.

8. Eine Vorrichtung (1000) nach einem der Ansprüche 1 bis 7, wobei
zumindest ein Teil der Längsleitungselemente (L1, L2, L3, L4, L5) und/oder der Querleitungselemente (Q1, Q2, Q3, Q4, Q5) jeweils ein Fertigungsmaterial mit oder aus Metall, insbesondere Stahl, Aluminium und Titan, und/oder Kunststoffen, insbesondere kohlenfaserverstärkten Kunststoffen, aufweist.

9. Eine Vorrichtung (1000) nach einem der Ansprüche 1 bis 8, wobei
zumindest ein Teil der Längsleitungselemente (L1, L2, L3, L4, L5) und/oder der Querleitungselemente (Q1, Q2, Q3, Q4, Q5) als Teleskopelement ausgebildet ist, wobei
jedes Teleskopelement zumindest ein, insbesondere röhrenförmiges, Innenelement (L11, L11', Q11, Q11') und ein das Innenelement zumindest teilweise umgebendes, insbesondere röhrenförmiges, Außenelement (L13, Q13) umfasst, wobei das zumindest eine Innenelement gegenüber dem Außenelement verlagerbar ist.

10. Eine Vorrichtung (1000) nach dem Anspruch 9, **dadurch gekennzeichnet, dass**
das zumindest eine Innenelement eines Teleskopelements an einem äußeren Ende verschlossen und/oder verschließbar ist, und/oder
die Verlagerung des zumindest einen Innenelements gegenüber dem Außenelement zumindest teilweise durch einen Druck im Innern des als Teleskopelement ausgebildeten Längsleitungselements (L1, L2, L3, L4, L5) oder Querleitungselements (Q1, Q2, Q3, Q4, Q5) zu bewirken ist, wobei der Druck insbesondere durch die Einleitung des Brandlöschmittels in die Löschmittelleitungsanordnung zu bewirken ist, und/oder
die Verlagerung des Innenelements gegenüber dem Außenelement zumindest teilweise durch einen Seilzugmechanismus zu bewirken ist, und/oder
die Verlagerung des Innenelements gegenüber dem Außenelement zumindest teilweise durch eine elektromechanische Verlagerungsvorrichtung zu bewirken ist.

11. Eine Vorrichtung (1000) nach einem der Ansprüche 1 bis 10, weiter umfassend
zumindest eine Sensorvorrichtung, insbesondere eine Rauchsensorvorrichtung und/oder eine optisch erfassende Sensorvorrichtung und/oder eine temperaturerfassende Sensorvorrichtung, die dazu geeignet ist,
einen Brand oder einen Teil eines Brandes, insbesondere einen Brandherd oder ein Glutnest, und/oder eine Brandausbreitungsrichtung zu erfassen.

12. Verfahren zur Brandprävention und zur Löschung eines Brandes mit den Schritten:
- Bereitstellen einer Vorrichtung (1000) nach einem der Ansprüche 1 bis 11;
- Anheben der Löschmittelleitungsanordnung (100, 200) und zumindest eines Teils der Löschmittelzuleitung (Z) mit der zumindest einen flugfähigen Tragvorrichtung (D) bis zu einem vorbestimmten Abstand (H) zur Erdoberfläche;
- Verlagern der Löschmittelleitungsanordnung (100, 200) und zumindest eines Teils der Löschmittelzuleitung (Z) über ein vorbestimmtes Zielgebiet;
- Einleiten des Brandlöschmittels aus dem Löschmittelreservoir (300) in die Löschmittelleitungsanordnung (100, 200) durch die Löschmittelzuleitung (Z);
- Ausleiten des Brandlöschmittels aus der Löschmittelleitungsanordnung (100, 200); wobei
die zumindest eine flugfähige Trägervorrichtung (D) durch eine Betriebsenergiezuleitung mit einer stationären oder verlegefähigen bodengebundenen Energieversorgungseinrichtung verbunden ist, und
**dadurch gekennzeichnet, dass**
die zumindest eine flugfähige Trägervorrichtung (D) mit elektrischer Betriebsenergie aus der stationären oder verlegefähigen bodengebundenen Energieversorgungseinrichtung versorgt wird.

## Claims

1. A fire extinguishing or fire prevention device (1000) comprising
- an extinguishing agent conduit arrangement (100, 200) with
• a plurality of longitudinal conduit elements (L1, L2, L3, L4, L5), each of which is suitable for conducting a fire extinguishing agent, and
• a plurality of transverse conduit elements (Q1, Q2, Q3, Q4, Q5), each of which is suitable for conducting a fire extinguishing agent, wherein
each of the longitudinal conduit elements (L1, L2, L3, L4, L5) is connected to at least one of the transverse conduit elements (Q1, Q2, Q3, Q4, Q5) by at least one connecting element (V), wherein
the connecting elements (V) are each adapted to conduct at least a part of the fire extinguishing agent from one of the longitudinal conduit elements (L1, L2, L3, L4, L5) into one of the transverse conduit elements (Q1, Q2, Q3, Q4, Q5) or from one of the transverse conduit elements (Q1, Q2, Q3, Q4, Q5) into one of the longitudinal conduit elements (L1, L2, L3, L4, L5);
- at least one extinguishing agent supply line (Z) which is arranged on the extinguishing agent conduit arrangement (100, 200) and is suitable for introducing the fire extinguishing agent into at least one of the longitudinal conduit elements (L1, L2, L3, L4, L5) or the transverse conduit elements (Q1, Q2, Q3, Q4, Q5);
- a plurality of outlets (A) each disposed on the extinguishing agent conduit arrangement (100, 200) and adapted to discharge the fire extinguishing agent from the extinguishing agent conduit arrangement (100, 200);
- at least one flight-capable carrier device (D) which is arranged on the extinguishing agent conduit arrangement (100, 200) and is suitable for lifting the extinguishing agent conduit arrangement (100, 200) with the outlets (A) and at least a part of the extinguishing agent supply line (Z) to a distance (H) from the ground surface during a fire extinguishing or fire prevention operation of the fire extinguishing or fire prevention device (1000) and for keeping the extinguishing agent conduit arrangement (100, 200) at least temporarily at a distance (H) from the ground surface; and
- a ground-based extinguishing agent reservoir (300) connected to the extinguishing agent supply line (Z) and adapted to provide and introduce the fire extinguishing agent into the extinguishing agent supply line (Z) and thereby provide the fire extinguishing agent to the extinguishing agent conduit arrangement (100, 200) during a fire extinguishing or fire prevention operation of the fire extinguishing or fire prevention device (1000);
**characterized by**
- at least one operating power supply line which is connected to the at least one flight-capable carrier device (D) and is arranged to provide the at least one flight-capable carrier device (D) with electrical operating power, wherein
the operating power supply line is further connected to a stationary or deployable ground-based power supply device.

2. A device (1000) according to claim 1, **characterized in that**,
at least some of the outlets (A) are formed as extinguishing agent spray nozzles or extinguishing agent sprinkler nozzles, and/or
at least some of the outlets (A) discharge the fire-extinguishing agent perpendicularly to the surface of the ground.

3. A device (1000) according to claim 1 or 2, wherein
at least some of the outlets (AL) are adapted to discharge the fire-extinguishing agent parallel to the ground surface,
**characterized in that**
a counterforce caused by the at least substantially parallel to the ground surface discharged fire extinguishing agent, which effects on the extinguishing agent conduit arrangement (100, 200), is at least partially compensated by a force opposing the counterforce, which is also caused by a discharge of fire extinguishing agent.

4. A device (1000) according to any one of claims 1 to 3, wherein
the ground-based extinguishing agent reservoir (300) is a tanker or a water tank.

5. A device (1000) according to any one of claims 1 to 4, further comprising
at least one flight-capable supply line carrier device (DZ) which is arranged on the extinguishing agent supply line (Z) and is suitable for lifting at least a part of the extinguishing agent supply line (Z) to a distance from the ground surface and for keeping it at least temporarily at a distance from the ground surface,
**characterized in that**
the extinguishing agent supply line (Z) is connected to the extinguishing agent reservoir (300) adapted to provide the fire extinguishing agent to the extinguishing agent conduit arrangement (100, 200) while the extinguishing agent supply line (Z) is lifted or kept by the at least one flight-capable supply line carrier device (DZ).

6. A device (1000) according to any one of claims 1 to 5, **characterized in that**,
the at least one flight-capable carrier device (D) is an unmanned aerial vehicle, UAV, in particular a drone.

7. A device (1000) according to any one of claims 1 to 6, further comprising
at least one control line (S) connected to the at least one flight-capable carrier device (D) and arranged to provide a control signal to the at least one flight-capable carrier device (D),
**characterized in that**
the control line (S) is connected to a stationary or deployable control device.

8. A device (1000) according to any one of claims 1 to 7, wherein
at least a part of the longitudinal conduit elements (L1, L2, L3, L4, L5) and/or of the transverse conduit elements (Q1, Q2, Q3, Q4, Q5) each comprises a manufacturing material with or made of metal, in particular steel, aluminum and titanium, and/or plastics, in particular carbon fiber-reinforced plastics.

9. A device (1000) according to any one of claims 1 to 8, wherein
at least a part of the longitudinal conduit elements (L1, L2, L3, L4, L5) and/or of the transverse conduit elements (Q1, Q2, Q3, Q4, Q5) is constructed as a telescopic element, wherein
each telescopic element comprises at least one, in particular tubular, inner element (L11, L11', Q11, Q11') and an, in particular tubular, outer element (L13, Q13) at least partially surrounding the inner element, the at least one inner element being displaceable relative to the outer element.

10. A device (1000) according to claim 9, **characterized in that**
the at least one inner element of a telescopic element is closed and/or closable at an outer end, and/or
the displacement of the at least one inner element relative to the outer element is to be effected at least partly by a pressure in the interior of the longitudinal conduit element (L1, L2, L3, L4, L5) or of the transverse conduit element (Q1, Q2, Q3, Q4, Q5) designed as a telescopic element, the pressure being effected in particular by the introduction of the fire extinguishing agent into the extinguishing agent conduit arrangement, and/or
the displacement of the inner element with respect to the outer element is to be effected at least partly by a cable pull mechanism, and/or
the displacement of the inner element with respect to the outer element is to be effected at least partially by an electromechanical displacement device.

11. A device (1000) according to any one of claims 1 to 10, further comprising
at least one sensor device, in particular a smoke sensor device and/or an optical sensing sensor device and/or a temperature sensing sensor device, which is configured to
detect a fire or a part of a fire, in particular a fire source or an ember nest, and/or a fire propagation direction.

12. A method for fire prevention and extinguishing a fire including the steps:
- Providing a device (1000) according to any one of claims 1 to 11;
- Lifting the extinguishing agent conduit arrangement (100, 200) and at least a part of the extinguishing agent supply line (Z) with the at least one flight-capable carrier device (D) to a predetermined distance (H) from the ground surface;
- Relocating the extinguishing agent conduit arrangement (100, 200) and at least a portion of the extinguishing agent supply line (Z) over a predetermined target area;
- Introducing the fire extinguishing agent from the extinguishing agent reservoir (300) into the extinguishing agent conduit arrangement (100, 200) through the extinguishing agent supply line (Z);
- Discharging the fire extinguishing agent from the extinguishing agent conduit arrangement (100, 200);
wherein
the at least one flight-capable carrier device (D) is connected by an operating power supply line to a stationary or deployable ground-based power supply device, and
**characterized in that**
the at least one flight-capable carrier device (D) is provided with electrical operating power from the stationary or deployable ground-based power supply device.

## Revendications

1. Dispositif d'extinction ou de prévention des incendies (1000) comprenant
- un dispositif de canalisation d'agent extincteur (100, 200) comprenant
• une pluralité d'éléments de conduits longitudinaux (L1, L2, L3, L4, L5), chacun d'entre eux étant apte à conduire un agent extincteur, et
• une pluralité d'éléments de conduits transversaux (Q1, Q2, Q3, Q4, Q5), chacun d'entre eux étant apte à conduire un agent extincteur, dans lesquels
chacun des éléments de conduit longitudinal (L1, L2, L3, L4, L5) est relié à au moins un des éléments de conduit transversal (Q1, Q2, Q3, Q4, Q5) par au moins un élément de connexion (V), dans lequel
les éléments de connexion (V) sont chacun adaptés pour conduire au moins une partie de l'agent extincteur de l'un des éléments de conduit longitudinal (L1, L2, L3, L4, L5) dans l'un des éléments de conduit transversal (Q1, Q2, Q3, Q4, Q5) ou de l'un des éléments de conduit transversal (Q1, Q2, Q3, Q4, Q5) dans l'un des éléments de conduit longitudinal (L1, L2, L3, L4, L5) ;
- au moins une conduite d'alimentation en agent extincteur (Z) disposée sur le dispositif de conduite d'agent extincteur (100, 200) et apte à introduire l'agent extincteur dans au moins un des éléments de conduite longitudinaux (L1, L2, L3, L4, L5) ou des éléments de conduite transversaux (Q1, Q2, Q3, Q4, Q5) ;
- une pluralité de sorties (A) disposées chacune sur le dispositif de conduit d'agent extincteur (100, 200) et adaptées pour décharger l'agent extincteur du dispositif de conduit d'agent extincteur (100, 200) ;
- au moins un dispositif porteur (D) apte au vol, disposé sur le dispositif de conduite d'agent extincteur (100, 200) et apte à soulever le dispositif de conduite d'agent extincteur (100, 200) avec les sorties (A) et au moins une partie de la conduite d'alimentation en agent extincteur (Z) à une distance (H) de la surface du sol pendant une opération d'extinction ou de prévention d'incendie du dispositif d'extinction ou de prévention d'incendie (1000) et pour maintenir le dispositif de conduite d'agent extincteur (100, 200) au moins temporairement à une distance (H) de la surface du sol; et
- un réservoir d'agent extincteur au sol (300) relié à la conduite d'alimentation en agent extincteur (Z) et adapté pour fournir et introduire l'agent extincteur dans la conduite d'alimentation en agent extincteur (Z) et fournir ainsi l'agent extincteur à l'agencement de conduits d'agent extincteur (100, 200) pendant une opération d'extinction ou de prévention d'incendie du dispositif d'extinction ou de prévention d'incendie (1000) ;
**caractérisé par**
- au moins une ligne d'alimentation électrique de fonctionnement qui est connectée à l'au moins un dispositif porteur apte au vol (D) et qui est arrangée pour fournir à l'au moins un dispositif porteur apte au vol (D) une alimentation électrique de fonctionnement, dans laquelle
la ligne d'alimentation électrique opérationnelle est en outre connectée à un dispositif d'alimentation électrique stationnaire ou déployable au sol.

2. Dispositif (1000) selon la revendication 1, **caractérisé en ce que**,
au moins certaines des sorties (A) sont constituées de buses de pulvérisation d'agents d'extinction ou de buses d'arrosage d'agents d'extinction, et/ou
au moins quelques-unes des sorties (A) déversent l'agent extincteur perpendiculairement à la surface du sol.

3. Dispositif (1000) selon la revendication 1 ou 2, dans lequel
au moins certaines des sorties (AL) sont conçues pour déverser l'agent extincteur parallèlement à la surface du sol,
**caractérisé par le fait que**
une force contraire causée par l'agent extincteur déchargé au moins sensiblement parallèlement à la surface du sol, qui agit sur le dispositif de canalisation de l'agent extincteur (100, 200), est au moins partiellement compensée par une force s'opposant à la force contraire, qui est également causée par la décharge de l'agent extincteur.

4. Dispositif (1000) selon l'une des revendications 1 à 3, dans lequel
le réservoir d' agent extincteur au sol (300) est un camion-citerne ou un réservoir d'eau.

5. Dispositif (1000) selon l'une des revendications 1 à 4, comprenant en outre
au moins un dispositif porteur de ligne d'alimentation (DZ) apte au vol, disposé sur la ligne d'alimentation en agent extincteur (Z) et apte à soulever au moins une partie de la ligne d'alimentation en agent extincteur (Z) à une certaine distance de la surface du sol et à la maintenir au moins temporairement à une certaine distance de la surface du sol,
**caractérisé par le fait que**
la conduite d'alimentation en agent extincteur (Z) est reliée au réservoir d'agent extincteur (300) adapté pour fournir l'agent extincteur au dispositif de conduite d'agent extincteur (100, 200) tandis que la conduite d'alimentation en agent extincteur (Z) est soulevée ou maintenue par au moins un dispositif porteur de conduite d'alimentation capable de voler (DZ).

6. Dispositif (1000) selon l'une quelconque des revendications 1 à 5, **caractérisé en ce que**,
l'au moins un dispositif porteur apte au vol (D) est un véhicule aérien sans pilote (UAV), en particulier un drone.

7. Dispositif (1000) selon l'une des revendications 1 à 6, comprenant en outre
au moins une ligne de commande (S) connectée à l'au moins un dispositif porteur apte au vol (D) et conçue pour fournir un signal de commande à l'au moins un dispositif porteur apte au vol (D),
**caractérisé par le fait que**
la ligne de contrôle (S) est reliée à un dispositif de contrôle fixe ou déployable.

8. Dispositif (1000) selon l'une des revendications 1 à 7, dans lequel
au moins une partie des éléments du conduit longitudinal (L1, L2, L3, L4, L5) et/ou des éléments du conduit transversal (Q1, Q2, Q3, Q4, Q5) comprend chacun un matériau de fabrication avec ou fait de métal, en particulier d'acier, d'aluminium et de titane, et/ou de plastique, en particulier de plastique renforcé de fibres de voiture bon.

9. Dispositif (1000) selon l'une des revendications 1 à 8, dans lequel
au moins une partie des éléments longitudinaux du conduit (L1, L2, L3, L4, L5) et/ou des éléments transversaux du conduit (Q1, Q2, Q3, Q4, Q5) est constituée d'un élément télescopique, dans lequel
chaque élément télescopique comprend au moins un élément intérieur, en particulier tubulaire (L11, L11', Q11, Q11') et un élément extérieur, en particulier tubulaire (L13, Q13) entourant au moins partiellement l'élément intérieur, l'élément intérieur au moins pouvant être déplacé par rapport à l'élément extérieur.

10. Dispositif (1000) selon la revendication 9, **caractérisé par le fait que**
l'élément intérieur au moins d'un élément télescopique est fermé et/ou refermable à une extrémité extérieure, et/ou
le déplacement d'au moins un élément intérieur par rapport à l'élément extérieur doit être effectué au moins en partie par une pression à l'intérieur de l'élément de conduit longitudinal (L1, L2, L3, L4, L5) ou de l'élément de conduit transversal (Q1, Q2, Q3, Q4, Q5) conçu comme un élément télescopique, la pression étant effectuée en particulier par l'introduction de l'agent extincteur dans le dispositif de conduit de l'agent extincteur, et/ou
le déplacement de l'élément intérieur par rapport à l'élément extérieur doit être effectué au moins en partie par un mécanisme de traction par câble, et/ou
le déplacement de l'élément intérieur par rapport à l'élément extérieur doit être effectué au moins partiellement par un dispositif de déplacement électromécanique.

11. Dispositif (1000) selon l'une des revendications 1 à 10, comprenant en outre
au moins un dispositif de détection, en particulier un dispositif de détection de fumée et/ou un dispositif de détection optique et/ou un dispositif de détection de température, qui est configuré pour
détecter un feu ou une partie d'un feu, en particulier une source de feu ou un nid de braises, et/ou une direction de propagation du feu.

12. Méthode de prévention des incendies et d'extinction d'un incendie comprenant les étapes suivantes :
- Fourniture d'un dispositif (1000) selon l'une quelconque des revendications 1 à 11 ;
- Soulever le dispositif de conduite d'agent extincteur (100, 200) et au moins une partie de la ligne d'alimentation en agent extincteur (Z) avec au moins un dispositif porteur apte au vol (D) à une distance prédéterminée (H) de la surface du sol ;
- Déplacer le dispositif de conduite d'agent extincteur (100, 200) et au moins une partie de la ligne d'alimentation en agent extincteur (Z) sur une zone cible prédéterminée ;
- Introduire l'agent extincteur du réservoir d'agent extincteur (300) dans le dispositif de conduite d'agent extincteur (100, 200) par la conduite d'alimentation en agent extincteur (Z) ;
- Décharger l'agent extincteur de l'agencement de conduits d'agent extincteur (100, 200) ;
dans lequel
l'au moins un dispositif porteur apte au vol (D) est connecté par une ligne d'alimentation électrique opérationnelle à un dispositif d'alimentation électrique stationnaire ou déployable au sol, et
**caractérisé par le fait que**
l'au moins un dispositif porteur apte au vol (D) est alimenté en énergie électrique par le dispositif d'alimentation stationnaire ou déployable au sol.
